(19) Europäisches Patentamt
European Patent Office
Office européen des brevets

(11) **EP 3 226 438 B1**

(12) **EUROPEAN PATENT SPECIFICATION**

(45) Date of publication and mention
of the grant of the patent:
**26.06.2019 Bulletin 2019/26**

(21) Application number: **15871919.5**

(22) Date of filing: **21.12.2015**

(51) Int Cl.:
**H04B 7/08** *(2006.01)*    **H04B 7/06** *(2006.01)*
**H04B 7/0408** *(2017.01)*    **H04B 7/0456** *(2017.01)*

(86) International application number:
**PCT/CN2015/098020**

(87) International publication number:
**WO 2016/101851 (30.06.2016 Gazette 2016/26)**

(54) **DIRECTIONAL BEAM BASED OPEN-LOOP MULTI-THREAD TRANSMITTING METHOD AND BASE STATION**

AUF GERICHTETEM STRAHL BASIERENDES MULTITHREAD-ÜBERTRAGUNGSVERFAHREN MIT OFFENER SCHLEIFE UND BASISSTATION

PROCÉDÉ ET STATION DE BASE DE TRANSMISSION À FILS MULTIPLES À BOUCLE OUVERTE BASÉE SUR UN FAISCEAU DIRECTIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2014 CN 201410811342**

(43) Date of publication of application:
**04.10.2017 Bulletin 2017/40**

(73) Proprietor: **Huawei Technologies Co., Ltd.**
**Longgang District**
**Shenzhen, Guangdong 518129 (CN)**

(72) Inventor: **ZHANG, Pengcheng**
**Shenzhen**
**Guangdong 518129 (CN)**

(74) Representative: **Epping - Hermann - Fischer Patentanwaltsgesellschaft mbH**
**Schloßschmidstraße 5**
**80639 München (DE)**

(56) References cited:
**WO-A2-2010/075172      CN-A- 102 340 339**
**CN-A- 102 801 454**

• **CATT ET AL: "Analysis on adaptive MIMO schemes for 1.28Mcps TDD", 3GPP DRAFT; R1-082560, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110820, [retrieved on 2008-06-24]**
• **TOMOKO, M. ET AL.: 'A Proposal of DPC Beamforming for Open Loop Multiuser MIMO Transmissions' 2010 IEEE INTERNATIONAL CONFERENCE ON COMMUNICATIONS 27 May 2010, XP031703410**
• **HAYATO, F. ET AL.: 'Weighted-Combining Calibration for Implicit Feedback Beamforming on Downlink Multiuser MIMO Systems' 2013 IEEE 24 TH ANNUAL INTERNATIONAL SYMPOSIUM ON PERSONAL, INDOOR, AND MOBILE RADIAO COMMUNICATIONS (PIMRC 11 September 2013, pages 846 - 850, XP055394472**
• **ALCATEL -LUCENT SHANGHAI BELL ET AL.: 'Channel Reciprocity Modeling and Performance Evaluation' 3GPP TSG RAN WG1 MEETING#59BITS, R1-100426 22 January 2010, XP050418074**

**Description**

**TECHNICAL FIELD**

The present invention relates to the communications field, and more specifically, to a directional-beam-based open-loop multi-stream transmission method and a base station.

**BACKGROUND**

In the wireless communications field, multiple-input multiple-output (Multiple-Input Multiple-Output, MIMO) technologies based on space diversity have been widely used. Because a closed-loop MIMO working manner and a MIMO working manner that is based on an uplink-downlink reciprocity measurement feature high precision, the two MIMO working manners are also mainstream implementation solutions currently. However, limited by a processing capability of terminals themselves, many terminals support only an uplink single output and downlink multiple inputs, and for many MIMO manners based on uplink-downlink reciprocity measurement, uplink-downlink reciprocity measurement cannot be performed actually.

When a terminal uses the uplink single output, in an existing method, a single-stream grouping reconstruction manner is used to calculate a weight of an uplink single-output channel, so as to obtain a dual-stream or multi-stream beamforming (Beamforming, BF) weight, thereby implementing channel correction for a dual-stream or multi-stream transmit channel.

An objective of the beamforming is to form an optimal combination or distribution of baseband (intermediate frequency) signals according to system performance indicators, and specifically, to compensate for signal fading and distortion caused by factors such as a space loss and multiple-path effects in a wireless communications process, and to reduce co-channel interference between users. A principle of the beamforming is: at a transmit end, a beamformer controls a phase and a signal amplitude of each transmit apparatus so as to obtain a required constructive and destructive interference pattern from a signal wavefront; and at a receive end, signals received by different receivers are combined in an appropriate manner to obtain an expected signal radiation pattern.

When a multidimensional channel of a measurable MIMO channel degrades into a one-dimensional channel of single-input multiple-output (Single-Input Mulitiple-Output, SIMO), if channel coefficients of the one-dimensional channel are mapped to multidimensional coefficients of the MIMO channel by means of simple grouping, because a single-stream weight and coherence and orthogonality between the multidimensional channels are unpredictable, there exist unpredictable gains and leakage on MIMO group weights and MIMO signals that are obtained by means of mapping SIMO channel coefficients, and channel correction performance is difficult to ensure.

WO 2010/075172 A2 provides a method and system that performs MIMO and beamforming at a base station based on an uplink channel sounding (ULCS) from only one of a mobile station's antennas and closed-loop multiple input, multiple output schemes based on the singular value decomposition (SVD) of the channel matrix. The ULCS is limited to sounding and the channel uses fewer than an optimal number of transmit antennas, for example, one for WiMAX. The base station's array may be configured for a full array transmitting mode or a sub-array transmitting mode.

According to 3GPP document R1-082560, MIMO technique for 1.28Mcps TDD system had been discussed intensively in RAN WG1. The link level and system level simulation results have been proposed to show that MIMO provides a significant increase of peak data rates, as well as improved high-rate availability. Then at RANI #53 the conclusion was reached that the generic PSRC (Per Stream Rate Control) structure is a suitable non-codebook MIMO scheme for 1.28Mcps TDD, and the data streams with their own rata control can be mapped on real antenna port or virtual eigenvector identified antenna port. And at RAN #40 meeting the MIMO Work Item for 1.28Mcps TDD was proposed. In some scenarios switching between the MIMO modes (such as beam-forming, spatial multiplexing etc.) can achieve more throughput than only one MIMO scheme employment. 3GPP document R1-082560 therefore analyzes the adaptive MIMO switching scheme for TDD.

**SUMMARY**

Embodiments of the present invention provide a directional-beam-based open-loop multi-stream transmission method and a base station, so as to perform channel correction on a multi-stream transmit channel of the base station according to an uplink channel response of a SIMO channel of the base station when a terminal uses an uplink single output, so that a relatively desirable channel correction effect can be obtained and robustness of multi-stream BF performance can be improved.

According to a first aspect, a base station is provided, where the base station includes: a first determining unit, configured to determine a first matrix according to an eigenvector, where the eigenvector is a main eigenvector obtained by performing eigenvector decomposition on an uplink channel response of a channel of the base station, the eigenvector is an n-dimensional vector, n is a quantity of transmit channels of the channel of the base station, the first matrix is an n*m beam weight matrix, each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1, n-dimensional vectors formed by any two rows of elements of the first matrix are uncorrelated, m is a positive integer, $1 < m \leq n$, and the channel of the base station is a single-input multiple-output SIMO channel of the base station or one SIMO channel decomposed from a multiple-input multiple-output MIMO channel of the base station; a second determining unit, configured to determine a second matrix, where the second matrix is an m*m matrix and is used to perform randomized encoding on a transmit signal of the channel of the base station with reference to the first matrix; and a channel correction unit, configured to perform beamforming on a transmit channel of the channel of the base station according to the product of the first matrix and the second matrix.

With reference to the first aspect, in a first possible implementation, the first determining unit is specifically configured to:

when a value of m is 2, divide the eigenvector $[\alpha_0\ \alpha_1\ ...\ \alpha_{n-1}]^T$ into a first set of beam weights $\alpha_{x(0)}, \alpha_{x(1)},..., \alpha_{x(k-1)}$ and a second set of beam weights $\alpha_{x(k)}, \alpha_{x(k-1)},..., \alpha_{x(n-1)}$ according to a polarization direction, where n is an even number, a value of k is n/2, and x(0) to x(n-1) is an arrangement manner of 0 to n-1; and

determine the first matrix $\mathbf{W_r}$ according to the first set of beam weights and the second set of beam weights, where $\mathbf{W_r}$ is represented by the following formula:

$$\mathbf{W_r} = \begin{bmatrix} \alpha_{x(0)} & 0 \\ \alpha_{x(1)} & 0 \\ ... & 0 \\ \alpha_{x(k-1)} & 0 \\ 0 & \alpha_{x(k)} \\ 0 & ... \\ 0 & \alpha_{x(n-2)} \\ 0 & \alpha_{x(n-1)} \end{bmatrix}^H .$$

With reference to the first aspect, in a second possible implementation, the first determining unit is specifically configured to:

when a value of m is 2, divide the eigenvector $[\alpha_0\ \alpha_1\ ...\ \alpha_{n-1}]^T$ into a first set of beam weights $\alpha_{x(0)}, \alpha_{x(1)},...,\alpha_{x(k-1)}$ and a second set of beam weights $\alpha_{x(k)}, \alpha_{x(k-1)},...,\alpha_{x(n-1)}$ according to a polarization direction, where n is an even number, a value of k is n/2, and x(0) to x(n-1) is an arrangement manner of 0 to n-1; and

determine the first matrix $\mathbf{W_r}$ according to the first set of beam weights, where the first set of beam weights is a set of beam weights with a greater statistical power of the first set of beam weights and the second set of beam weights, and $\mathbf{W_r}$ is represented by the following formula:

$$\mathbf{W_r} = \begin{bmatrix} \alpha_{x(0)} & 0 \\ \alpha_{x(1)} & 0 \\ ... & 0 \\ \alpha_{x(k-1)} & 0 \\ 0 & \alpha_{x(0)} \\ 0 & \alpha_{x(1)} \\ 0 & ... \\ 0 & \alpha_{x(k-1)} \end{bmatrix}^H ,$$

or

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k-1)}^* \\ 0 & \cdots \\ 0 & \alpha_{x(1)}^* \\ 0 & \alpha_{x(0)}^* \end{bmatrix}^H .$$

With reference to the first aspect, in a third possible implementation, the first determining unit is specifically configured to:

when a value of m is 2, determine the first matrix $W_r$ according to the eigenvector $[\alpha_0\ \alpha_1\ \cdots\ \alpha_{n-1}]^T$, where $W_r$ is represented by the following formula:

$$W_r = \begin{bmatrix} \alpha_0 & \alpha_{n-1}^* \\ \alpha_1 & \alpha_{n-2}^* \\ \cdots & \cdots \\ \alpha_{n-2} & \alpha_1^* \\ \alpha_{n-1} & \alpha_0^* \end{bmatrix}^H$$

where $\alpha_j^*$ is a conjugate of $\alpha_j$, and $0 \le j \le n-1$.

With reference to the first aspect, in a fourth possible implementation, the first determining unit is specifically configured to:

when a value of m is 2, determine the first matrix $W_r$ according to the eigenvector $[\alpha_0\ \alpha_1\ \cdots\ \alpha_{n-1}]^T$, where $W_r$ is represented by the following formula:

$$W_r = \begin{bmatrix} \alpha_0 & \alpha_{n-1}^* \\ \alpha_1 & \alpha_{n-2}^* \\ \cdots & \cdots \\ \alpha_{k-1} & \alpha_k^* \\ \alpha_k & -\alpha_{k-1}^* \\ \cdots & \cdots \\ \alpha_{n-2} & -\alpha_1^* \\ \alpha_{n-1} & -\alpha_0^* \end{bmatrix}^H$$

where n is an even number, a value of k is n/2, $\alpha_j^*$ is a conjugate of $\alpha_j$, and $0 \le j \le n-1$.

With reference to any one of the first aspect, or the first possible implementation of the first aspect to the fourth possible implementation of the first aspect, in a fifth possible implementation, the second determining unit is specifically

4

configured to determine the second matrix, where the second matrix is represented by $\mathbf{P}_{rb0}^{OL}$ and $\mathbf{P}_{rb1}^{OL}$, and $\mathbf{P}_{rb0}^{OL}$ and $\mathbf{P}_{rb1}^{OL}$ are represented by the following formulas:

$$\mathbf{P}_{rb0}^{OL} = \frac{1}{\sqrt{2}}\begin{bmatrix} 1 & 1 \\ 1 & -1 \end{bmatrix}\begin{bmatrix} p_0^0 & 0 \\ 0 & p_0^1 \end{bmatrix}, \mathbf{P}_{rb1}^{OL} = \frac{1}{\sqrt{2}}\begin{bmatrix} 1 & -1 \\ 1 & 1 \end{bmatrix}\begin{bmatrix} p_0^0 & 0 \\ 0 & p_0^1 \end{bmatrix};$$

or

$$\mathbf{P}_{rb0}^{OL} = \begin{bmatrix} 1 & 0 \\ 0 & 1 \end{bmatrix}\begin{bmatrix} p_0^0 & 0 \\ 0 & p_0^1 \end{bmatrix}, \mathbf{P}_{rb1}^{OL} = \begin{bmatrix} 0 & 1 \\ 1 & 0 \end{bmatrix}\begin{bmatrix} p_0^0 & 0 \\ 0 & p_0^1 \end{bmatrix};$$

where $\begin{bmatrix} p_0^0 & p_0^1 \end{bmatrix}$ is an equal-amplitude normalized initial vector set, $\left|p_0^0\right|^2 + \left|p_0^1\right|^2 = 1, \left|p_0^0\right| = \left|p_0^1\right|$, rb0 represents a frequency domain resource block with an odd index number of the channel of the base station, rb1 represents a frequency domain resource block with an even index number of the channel of the base station, the odd number and the even number are alternate, $\mathbf{P}_{rb0}^{OL}$ represents the second matrix used for transmitting a signal on the frequency domain resource block with an odd index number of the channel of the base station, and $\mathbf{P}_{rb1}^{OL}$ represents the second matrix used for transmitting a signal on the frequency domain resource block with an even index number of the channel of the base station.

With reference to any one of the first aspect, or the first possible implementation of the first aspect to the fourth possible implementation of the first aspect, in a sixth possible implementation, the second determining unit is specifically configured to determine the second matrix, where the second matrix is represented by $\mathbf{P}_{rbt}^{OL}$, and $\mathbf{P}_{rbt}^{OL}$ is represented by the following formula:

$$\mathbf{P}_{rbt}^{OL} = \frac{1}{\sqrt{2}}\begin{bmatrix} 1 & 0 \\ 0 & e^{it\theta} \end{bmatrix}\begin{bmatrix} 1 & 1 \\ 1 & e^{i\pi} \end{bmatrix}\begin{bmatrix} 1 & 0 \\ 0 & e^{it\theta} \end{bmatrix}\begin{bmatrix} p_0^0 & 0 \\ 0 & p_0^1 \end{bmatrix};$$

where i is an imaginary unit, $\theta$ is a phase parameter for delay encoding, t is an index number of a frequency domain resource block of the channel of the base station, $\begin{bmatrix} p_0^0 & p_0^1 \end{bmatrix}$ is an equal-amplitude normalized initial vector set, $\left|p_0^0\right|^2 + \left|p_0^1\right|^2 = 1, \left|p_0^0\right| = \left|p_0^1\right|$, rbt represents a frequency domain resource block with the index number t of the channel of the base station, and $\mathbf{P}_{rbt}^{OL}$ represents the second matrix used for transmitting a signal on the frequency domain resource block with the index number t of the channel of the base station.

With reference to the sixth possible implementation of the first aspect, in a seventh possible implementation, the specific implementation is: a value of $\theta$ is $\pi/6$.

With reference to the first aspect, in an eighth possible implementation, the first determining unit is specifically configured to:

when a value of m is 4, determine the first matrix $\mathbf{W}_r$ according to the eigenvector $[\alpha_0 \ \alpha_1 \ ... \ \alpha_{n-1}]^T$, where $\mathbf{W}_r$ is represented by the following formula:

$$
\mathbf{W}_r = \begin{bmatrix}
\alpha_0 & \alpha_{n-1}{}^* & \alpha_k & \alpha_{k-1}{}^* \\
\alpha_1 & \alpha_{n-2}{}^* & \cdots & \cdots \\
\cdots & \cdots & \alpha_{n-2} & \alpha_1{}^* \\
\alpha_{k-1} & \alpha_k{}^* & \alpha_{n-1} & \alpha_0{}^* \\
\alpha_k & -\alpha_{k-1}{}^* & -\alpha_0 & \alpha_{n-1}{}^* \\
\cdots & \cdots & -\alpha_1 & \alpha_{n-2}{}^* \\
\alpha_{n-2} & -\alpha_1{}^* & \cdots & \cdots \\
\alpha_{n-1} & -\alpha_0{}^* & -\alpha_{k-1} & \alpha_k{}^*
\end{bmatrix}^H
$$

where n is an even number, a value of k is n/2, $\alpha_j{}^*$ is a conjugate of $\alpha_j$, and $0 \leq j \leq n-1$.

With reference to the first aspect or the eighth possible implementation of the first aspect, in a ninth possible implementation, the second determining unit is specifically configured to determine the second matrix, where the second matrix is represented by $\mathbf{P}_{rb0}^{OL}$, $\mathbf{P}_{rb1}^{OL}$, $\mathbf{P}_{rb2}^{OL}$, and $\mathbf{P}_{rb3}^{OL}$, and $\mathbf{P}_{rb0}^{OL}$, $\mathbf{P}_{rb1}^{OL}$, $\mathbf{P}_{rb2}^{OL}$, and $\mathbf{P}_{rb3}^{OL}$ are represented by the following formulas:

$$
\mathbf{P}_{rb0}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad
\mathbf{P}_{rb1}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},
$$

$$
\mathbf{P}_{rb2}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad
\mathbf{P}_{rb3}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};
$$

or

$$
\mathbf{P}_{rb0}^{OL} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad
\mathbf{P}_{rb1}^{OL} = \begin{bmatrix} 0 & 0 & 0 & 1 \\ 1 & 0 & 0 & 0 \\ 0 & 1 & 0 & 0 \\ 0 & 0 & 1 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},
$$

$$
\mathbf{P}_{rb2}^{OL} = \begin{bmatrix} 0 & 0 & 1 & 0 \\ 0 & 0 & 0 & 1 \\ 1 & 0 & 0 & 0 \\ 0 & 1 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad
\mathbf{P}_{rb3}^{OL} = \begin{bmatrix} 0 & 1 & 0 & 0 \\ 0 & 0 & 1 & 0 \\ 0 & 0 & 0 & 1 \\ 1 & 0 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};
$$

where $\begin{bmatrix} p_0^0 & p_0^1 & p_0^2 & p_0^3 \end{bmatrix}$ is an equal-amplitude normalized initial vector set, $|p_0^0| = |p_0^1| = |p_0^2| = |p_0^3|$, $|p_0^0|^2 + |p_0^1|^2 + |p_0^2|^2 + |p_0^3|^2 = 1$, $|p_0^0| = |p_0^1| = |p_0^2| = |p_0^3|$ rb0, rb1, rb2, and rb3 respectively represent four types of frequency domain resource blocks with index numbers modulo 4 of the channel of the

base station, and $\mathbf{P}^{\mathbf{OL}}_{\mathbf{rb0}}$, $\mathbf{P}^{\mathbf{OL}}_{\mathbf{rb1}}$, $\mathbf{P}^{\mathbf{OL}}_{\mathbf{rb2}}$, and $\mathbf{P}^{\mathbf{OL}}_{\mathbf{rb3}}$ respectively represent second matrices used for transmitting a signal on the four types of frequency domain resource blocks of the channel of the base station.

With reference to the first aspect or the eighth possible implementation of the first aspect, in a tenth possible implementation, the second determining unit is specifically configured to determine the second matrix, where the second matrix is represented by $\mathbf{P}^{\mathbf{OL}}_{\mathbf{rbk}}$, and $\mathbf{P}^{\mathbf{OL}}_{\mathbf{rbk}}$ is represented by the following formula:

$$\mathbf{P}^{\mathbf{OL}}_{\mathbf{rbt}} = \frac{1}{2} \begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix} \begin{bmatrix} 1 & 1 & 1 & 1 \\ 1 & e^{-i2\pi/4} & e^{-i4\pi/4} & e^{-i6\pi/4} \\ 1 & e^{-i4\pi/4} & e^{-i8\pi/4} & e^{-i12\pi/4} \\ 1 & e^{-i6\pi/4} & e^{-i12\pi/4} & e^{-i18\pi/4} \end{bmatrix} \begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix} \begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

where i is an imaginary unit, $\theta$ is a phase parameter for delay encoding, t is an index number of a frequency domain resource block of the channel of the base station, $\begin{bmatrix} p_0^0 & p_0^1 & p_0^2 & p_0^3 \end{bmatrix}$ is an equal-amplitude normalized initial vector set, $\left| p_0^0 \right|^2 + \left| p_0^1 \right|^2 + \left| p_0^2 \right|^2 + \left| p_0^3 \right|^2 = 1$, $\left| p_0^0 \right| = \left| p_0^1 \right| = \left| p_0^2 \right| = \left| p_0^3 \right|$, rbt represents a frequency domain resource block with the index number t of the channel of the base station, and $\mathbf{P}^{\mathbf{OL}}_{\mathbf{rbt}}$ represents the second matrix used for transmitting a signal on the frequency domain resource block with the index number t of the channel of the base station.

With reference to the tenth possible implementation of the first aspect, in an eleventh possible implementation, the specific implementation is: a value of $\theta$ is $\pi/6$.

According to a second aspect, a directional-beam-based open-loop multi-stream transmission method is provided, where the method includes: determining a first matrix according to an eigenvector, where the eigenvector is a main eigenvector obtained by performing eigenvector decomposition on an uplink channel response of a channel of the base station, the eigenvector is an n-dimensional vector, n is a quantity of transmit channels of the channel of the base station, the first matrix is an n*m beam weight matrix, each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1, n-dimensional vectors formed by any two rows of elements of the first matrix are uncorrelated, m is a positive integer, 1<m≤n, and the channel of the base station is a single-input multiple-output SIMO channel of the base station or one SIMO channel decomposed from a multiple-input multiple-output MIMO channel of the base station; determining a second matrix, where the second matrix is an m*m matrix and is used to perform randomized encoding on a transmit signal of the channel of the base station with reference to the first matrix; and performing beamforming on a transmit channel of the channel of the base station according to the product of the first matrix and the second matrix.

Based on the foregoing technical solutions, for the directional-beam-based open-loop multi-stream transmission method and the base station that are provided in the embodiments of the present invention, an n-dimensional main eigenvector obtained by performing eigenvector decomposition on an uplink channel response of a SIMO channel is reconstructed to obtain multiple uncorrelated n-dimensional vectors; a multi-stream beam weight matrix is constructed according to the multiple n-dimensional vectors, so as to determine a randomized encoding matrix of the multi-stream beam weight matrix; and beamforming is performed on a transmit channel of the SIMO channel according to the multi-stream beam weight matrix and the randomized encoding matrix. In this way, when a terminal uses an uplink single output, channel beamforming can be performed on a multi-stream transmit channel of the base station according to the uplink channel response of the SIMO channel of the base station. This maintains a relatively stable channel correction effect and improves robustness of multi-stream BF performance.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flowchart of a directional-beam-based open-loop multi-stream transmission method according to an embodiment of the present invention;

FIG. 2 is a schematic structural diagram of a base station according to an embodiment of the present invention; and

FIG. 3 is another schematic structural diagram of a base station according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), or a Universal Mobile Telecommunications System (Universal Mobile Telecommunication System, "UMTS" for short). A terminal (Terminal) may be referred to as user equipment (User Equipment, "UE" for short), a user, or the like. The terminal may communicate with one or more core networks by using a radio access network (for example, Radio Access Network, "RAN" for short). The terminal may be a mobile terminal, such as a mobile phone (or a "cellular" phone) and a computer with a mobile terminal. For example, the terminal may be a portable, pocket-sized, handheld, computer built-in, or in-vehicle mobile apparatus, which exchanges voice and/or data with the radio access network.

A base station may be a base station (BTS, Base Transceiver Station) in GSM or CDMA, or may be a base station (NodeB) in WCDMA, or may be an evolved NodeB (eNB or e-NodeB, evolutional NodeB) in LTE, and this is not limited in the present invention. However, for ease of description, the following embodiments are described by using an eNB as an example.

To easily understand the embodiments of the present invention, some elements used in description of the embodiments of the present invention are first described herein.

A transposed matrix: A new matrix obtained after rows of a matrix A are turned into corresponding columns is referred to as a transposed matrix of A, and is denoted as $A^T$. A first column of a matrix is usually used as a first row of a transposed matrix, and a first row of the matrix is used as a first column of the transposed matrix.

A conjugate transposed matrix: Matrices are classified into real matrices and complex matrices. A transposed matrix is obtained by only transposing rows and columns of a matrix, and a conjugate transposed matrix is obtained by transposing rows and columns and further by taking a conjugate of each element. For example, a conjugate of a complex number a+bi is a-bi. A conjugate transposed matrix of the matrix A may be denoted as $A^H$.

Adjoint matrix: For an N*N matrix A, if there is an N*N matrix B meeting that $A*B=I_N$, B is an adjoint matrix of A. $I_N$ represents an identity matrix of size N. The adjoint matrix of A may be represented by A*.

Singular value decomposition (Singular Value Decomposition, SVD) is a matrix decomposition method. For a matrix $\mathbf{H}_{N*M}$, it is assumed that $\mathbf{H}_{N*M} = V_{N*N}\Lambda_{N*M}\mathbf{U}^*_{M*M}$ is obtained by performing singular value decomposition on $\mathbf{H}_{N*M}$. An element on a diagonal of a matrix $\Lambda_{N*M}$ is equal to a singular value of $\mathbf{H}_{N*M}$. A column of $V_{N*N}$ is a left singular vector of the singular value, and a column of $\mathbf{U}_{M*M}$ is a right singular vector of the singular value. $\mathbf{U}_{M*M} \cdot \mathbf{U}^*_{M*M} = I_M$, where $\mathbf{U}^*_{M*M}$ represents an adjoint matrix of $\mathbf{U}_{M*M}$, $I_M$ represents an identity matrix of size M. $V_{N*N} \cdot V^*_{N*N} = I_N$, where $V^*_{N*N}$ represents an adjoint matrix of $V_{N*N}$, and $I_N$ represents an identity matrix of size N. The first M columns of the left singular vector (that are, the first M columns of $V_{N*N}$) form a main eigenvector of $\mathbf{H}_{N*M}$.

It should be understood that, in the present invention, a matrix with an * on the upper right corner represents an adjoint matrix of the matrix. For example, a matrix A* represents an adjoint matrix of a matrix A. In addition, a complex number with an * on the upper right corner represents a conjugate of the complex number. For example, a complex number a* represents a conjugate of a complex number a.

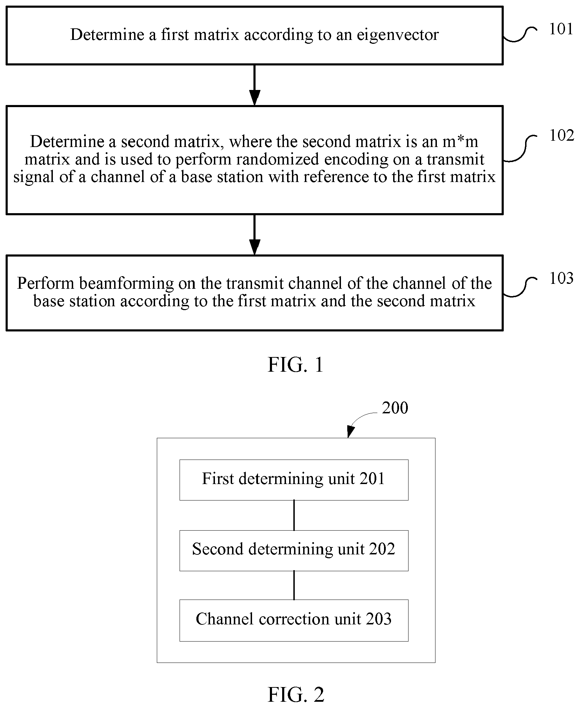

FIG. 1 is a flowchart of a directional-beam-based open-loop multi-stream transmission method according to an embodiment of the present invention. The method in FIG. 1 is performed by a base station. The method includes the following steps.

101: Determine a first matrix according to an eigenvector.

The eigenvector is a main eigenvector obtained by performing eigenvector decomposition on an uplink channel response of a channel of the base station, the eigenvector is an n-dimensional vector, and n is a quantity of transmit channels of the channel of the base station.

The channel of the base station is a single-input multiple-output SIMO channel of the base station or one SIMO channel decomposed from a multiple-input multiple-output MIMO channel of the base station.

In addition, the first matrix is an n*m beam weight matrix, n-dimensional vectors formed by any two rows of elements of the first matrix are uncorrelated, m is a positive integer, and 1<m≤n. Each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1. That is, all non-zero elements of the first matrix are derived from a sub-vector $\alpha_j$ of an eigenvector $[\alpha_0$ $\alpha_1 \ldots \alpha_{n-1}]^T$, and a specific value may be $\alpha_j$, $-\alpha_j$, $\alpha_j^*$, or $-\alpha_j^*$, where $\alpha_j^*$ represents a conjugate of $\alpha_j$, and $0 \le j \le n-1$.

T on the upper right corner of the matrix indicates a transposed matrix, that is, the matrix $[\alpha_0\ \alpha_1 \ldots \alpha_{n-1}]^T$ is a transposed matrix of $[\alpha_0\ \alpha_1 \ldots \alpha_{n-1}]$.

It should be understood that the n-dimensional vector mentioned in this embodiment of the present invention may also be understood as an n*1 matrix.

It should be understood that, the base station usually has an even quantity of transmit channels, that is, n is an even. Certainly, in a scenario that a value of n is an odd, the method in this embodiment of the present invention may also be applicable.

It should be understood that, in this embodiment of the present invention, when eigenvector decomposition is performed, multiple manners may be used to perform eigenvector decomposition on the uplink channel response. For example, SVD decomposition may be used to perform eigenvector decomposition on the uplink channel response. The channel of the base station is a SIMO channel or one SIMO channel decomposed from a MIMO channel. Therefore, in this embodiment of the present invention, SVD decomposition may be performed on a matrix $\mathbf{H}_{N*M}$ of the uplink channel response: $\mathbf{H}_{N*M} = V_{N*N}\Lambda_{N*M}\mathbf{U}^*_{M*M}$. An eigenvector formed by the first column of $V_{N*N}$ is the eigenvector mentioned in this embodiment of the present invention and is represented by $[\alpha_0\ \alpha_1 \ldots \alpha_{N-1}]^T$.

It should be understood that, in this embodiment of the present invention, when the first matrix is determined based on an eigenvector, multiple vectors with same dimensions as the eigenvector are reconstructed according to beam weights represented by sub-vectors in the eigenvector, and the multiple vectors are uncorrelated. Then, the multiple vectors are combined into one matrix, that is, the first matrix.

For example, assuming that the eigenvector is $[\alpha_0\ \alpha_1\ \alpha_2\ \alpha_3\ \alpha_4\ \alpha_5\ \alpha_6\ \alpha_7]^T$, a first 8-dimensional vector $[\alpha_0\ \alpha_1\ \alpha_2\ \alpha_3\ \alpha_4\ \alpha_5\ \alpha_6\ \alpha_7]^T$ and a second 8-dimensioanl vector $[\alpha_7{}^*\ \alpha_6{}^*\ \alpha_5{}^*\ \alpha_4{}^*\ -\alpha_3{}^*\ -\alpha_2{}^*\ -\alpha_1{}^*\ -\alpha_0{}^*]^T$ may be determined according to $[\alpha_0\ \alpha_1\ \alpha_2\ \alpha_3\ \alpha_4\ \alpha_5\ \alpha_6\ \alpha_7]^T$ . The first 8-dimensional vector and the second 8-dimensional vector are uncorrelated, and sub-vector values of the first 8-dimensional vector and the second 8-dimensional vector are sub-vectors in $[\alpha_0\ \alpha_1\ \alpha_2\ \alpha_3\ \alpha_4\ \alpha_5\ \alpha_6\ \alpha_7]^T$ or values obtained after conjugates of the sub-vectors in $[\alpha_0\ \alpha_1\ \alpha_2\ \alpha_3\ \alpha_4\ \alpha_5\ \alpha_6\ \alpha_7]^T$ are multiplied by $\pm 1$. The first matrix $\mathbf{W_r}$ may be determined according to the first 8-dimensional vector and the second 8-dimensional vector, and $\mathbf{W_r}$ may be represented by the following formula:

$$\mathbf{W_r} = \begin{bmatrix} \alpha_0 & \alpha_7^* \\ \alpha_1 & \alpha_6^* \\ \alpha_2 & \alpha_5^* \\ \alpha_3 & \alpha_4^* \\ \alpha_4 & -\alpha_3^* \\ \alpha_5 & -\alpha_2^* \\ \alpha_6 & -\alpha_1^* \\ \alpha_7 & -\alpha_0^* \end{bmatrix}^{\mathbf{H}}$$

where H on the upper right corner of the matrix indicates a conjugate transposed matrix, that is, the matrix
$$\begin{bmatrix} \alpha_0 & \alpha_7^* \\ \alpha_1 & \alpha_6^* \\ \alpha_2 & \alpha_5^* \\ \alpha_3 & \alpha_4^* \\ \alpha_4 & -\alpha_3^* \\ \alpha_5 & -\alpha_2^* \\ \alpha_6 & -\alpha_1^* \\ \alpha_7 & -\alpha_0^* \end{bmatrix}^H$$

is a conjugate transposed matrix of a matrix
$$\begin{bmatrix} \alpha_0 & \alpha_7^* \\ \alpha_1 & \alpha_6^* \\ \alpha_2 & \alpha_5^* \\ \alpha_3 & \alpha_4^* \\ \alpha_4 & -\alpha_3^* \\ \alpha_5 & -\alpha_2^* \\ \alpha_6 & -\alpha_1^* \\ \alpha_7 & -\alpha_0^* \end{bmatrix}.$$

102: Determine a second matrix.

The second matrix is an m*m matrix and is used to perform randomized encoding on a transmit signal of the channel of the base station with reference to the first matrix.

It should be understood that, the second matrix may be represented by multiplication of multiple matrices, and a multiplication result is equivalent to an m*m matrix.

103: Perform beamforming on a transmit channel of the channel of the base station according to the first matrix and the second matrix.

Optionally, D is used to represent a source signal transmitted on the channel of the base station, $\mathbf{W_r}$ represents the first matrix, $\mathbf{P}^{OL}$ represents the second matrix, and S represents a signal obtained after beamforming is performed on the source signal transmitted on the channel of the base station. In this case, step 103 may be specifically represented by the following formula:

$$S = D * P^{OL} * W_r .$$

According to this embodiment of the present invention, an n-dimensional main eigenvector obtained by performing eigenvector decomposition on an uplink channel response of a SIMO channel is reconstructed to obtain multiple uncorrelated n-dimensional vectors; a multi-stream beam weight matrix is constructed according to the multiple n-dimensional vectors, so as to determine a randomized encoding matrix of the multi-stream beam weight matrix; and beamforming is performed on a transmit channel of the SIMO channel according to the multi-stream beam weight matrix and the randomized encoding matrix. In this way, when a terminal uses an uplink single output, beamforming can be performed on a multi-stream transmit channel of the base station according to the uplink channel response of the SIMO channel of the base station. This maintains a relatively stable channel correction effect and improves robustness of multi-stream BF performance.

In this embodiment of the present invention, multiple manners may be used to determine the first matrix.

For example, two n-dimensional vectors may be formed according to the eigenvector, and the first matrix is formed according to the two n-dimensional vectors.

Optionally, in an embodiment, a specific implementation of step 101 is: dividing the eigenvector $[\alpha_0 \ \alpha_0 \ ... \ \alpha_{n-1}]^T$ into a first set of beam weights $\alpha_{x(0)}, \alpha_{x(1)}, ..., \alpha_{x(k-1)}$ and a second set of beam weights $\alpha_{x(k)}, \alpha_{x(k-1)}, ..., \alpha_{x(n-1)}$ according to a polarization direction, where n is an even number, a value of k is n/2, and x(0) to x(n-1) is an arrangement manner of 0 to n-1; and determining a first n-dimensional vector $[\alpha_{x(0)} \ \alpha_{x(1)} \ ... \ \alpha_{x(k-1)} \ 0 \ ... \ 0 \ 0]^T$ and a second n-dimensional vector $[0 \ 0 \ ... \ 0 \ \alpha_{x(k)} \ ... \ \alpha_{x(n-2)} \ \alpha_{x(n-1)}]^T$ according to the first set of beam weights and the second set of beam weights, so as to determine the first matrix $\mathbf{W_r}$, where $\mathbf{W_r}$ is represented by the following formula:

$$\mathbf{W}_r = \begin{bmatrix} \alpha_{x(0)} & 0 \\ \alpha_{x(1)} & 0 \\ \dots & 0 \\ \alpha_{x(k-1)} & 0 \\ 0 & \alpha_{x(k)} \\ 0 & \dots \\ 0 & \alpha_{x(n-2)} \\ 0 & \alpha_{x(n-1)} \end{bmatrix}^H.$$

According to an antenna polarization direction, transmit channels may be divided into two groups of different polarized channels. That is, sub-vectors of the eigenvector $[\alpha_0 \ \alpha_1 \ \dots \ \alpha_{n-1}]^T$ may be divided into two sets of polarized channel beam weights according to a polarization direction.

For example, it is assumed that the channel eigenvector is $[\alpha_0 \ \alpha_1 \ \alpha_2 \ \alpha_3 \ \alpha_4 \ \alpha_5 \ \alpha_6 \ \alpha_7]^T$. The eigenvector is divided into two sets of polarized channel beam weights of according to a polarization direction, which are respectively $\alpha_1, \alpha_3, \alpha_5, \alpha_6$ and $\alpha_0, \alpha_2, \alpha_4, \alpha_7$. Respective 0 vectors are added to the two sets of polarized channel beam weights to form two 8-dimensional vectors $[\alpha_1 \ \alpha_3 \ \alpha_5 \ \alpha_6 \ 0 \ 0 \ 0 \ 0]^T$ and $[0 \ 0 \ 0 \ 0 \ \alpha_0 \ \alpha_2 \ \alpha_4 \ \alpha_7]^T$ of a dual-stream beam weight matrix. That is, values of x(0)-x(7) are respectively 1, 3, 5, 6, 0, 2, 4, and 7, and values of $\alpha_{x(0)}, \alpha_{x(1)}, \alpha_{x(2)}, \alpha_{x(3)}, \alpha_{x(4)}, \alpha_{x(5)}, \alpha_{x(6)},$ **and** $\alpha_{x(7)},$ are $\alpha_1, \alpha_3, \alpha_5, \alpha_6, \alpha_0, \alpha_2, \alpha_4,$ **and** $\alpha_7$ , respectively. In this case, the first matrix $\mathbf{W}_r$ may be represented by the following formula:

$$\mathbf{W}_r = \begin{bmatrix} \alpha_1 & 0 \\ \alpha_3 & 0 \\ \alpha_5 & 0 \\ \alpha_7 & 0 \\ 0 & \alpha_0 \\ 0 & \alpha_2 \\ 0 & \alpha_4 \\ 0 & \alpha_7 \end{bmatrix}^H.$$

Optionally, in another embodiment, a specific implementation of step 101 is: dividing the eigenvector $[\alpha_0 \ \alpha_1 \ \dots \ \alpha_{n-1}]^T$ into a first set of beam weights $\alpha_{x(0)}, \alpha_{x(1)}, \dots, \alpha_{x(k-1)}$ and a second set of beam weights $\alpha_{x(k)}, \alpha_{x(k+1)}, \dots, \alpha_{x(n-1)}$ according to a polarization direction, where n is an even number, a value of k is n/2, and x(0) to x(n-1) is an arrangement manner of 0 to n-1; and

determining the first matrix $\mathbf{W}_r$ according to the first set of beam weights, where the first set of beam weights is a set of beam weights with a greater statistical power of the first set of beam weights and the second set of beam weights, and $\mathbf{W}_r$ is represented by the following formula:

$$\mathbf{W}_r = \begin{bmatrix} \alpha_{x(0)} & 0 \\ \alpha_{x(1)} & 0 \\ \cdots & 0 \\ \alpha_{x(t-1)} & 0 \\ 0 & \alpha_{x(0)} \\ 0 & \alpha_{x(1)} \\ 0 & \cdots \\ 0 & \alpha_{x(t-1)} \end{bmatrix}^H ,$$

or

$$\mathbf{W}_r = \begin{bmatrix} \alpha_{x(0)} & 0 \\ \alpha_{x(1)} & 0 \\ \cdots & 0 \\ \alpha_{x(t-1)} & 0 \\ 0 & \alpha_{x(t-1)}^* \\ 0 & \cdots \\ 0 & \alpha_{x(1)}^* \\ 0 & \alpha_{x(0)}^* \end{bmatrix}^H .$$

For example, it is assumed that the channel eigenvector is $[\alpha_0\ \alpha_1\ \alpha_2\ \alpha_3\ \alpha_4\ \alpha_5\ \alpha_6\ \alpha_7]^H$. The eigenvector is divided into two sets of polarized channel beam weights according to a polarization direction, which are respectively a first set of beam weights $\alpha_0, \alpha_1, \alpha_2, \alpha_3$ and a second set of beam weights $\alpha_4, \alpha_5, \alpha_6, \alpha_7$. That is, values of x(0)-x(7) are respectively 0, 1, 2, 3, 4, 5, 6, and 7, and values of $\alpha_{x(0)}, \alpha_{x(1)}, ..., \alpha_{x(7)}$ are $\alpha_0, \alpha_1, ..., \alpha_7$, respectively. It might be assumed that $\alpha_0, \alpha_1, \alpha_2, \alpha_3$, is a set of beam weights with a greater statistical power of the two sets of polarized channel beam weights.

In a specific implementation, the first set of beam weights may be copied to another group of polarized channels, respective 0 vectors are added to the two sets of polarized channel beam weights to form two 8-dimensional vectors $[\alpha_0\ \alpha_1\ \alpha_2\ \alpha_3\ 0\ 0\ 0\ 0]^T$ and $[\ 0\ 0\ 0\ 0\ \alpha_0\ \alpha_1\ \alpha_2\ \alpha_3]^T$, so as to form the second matrix $\mathbf{W}_r$. In this case, $\mathbf{W}_r$ may be represented by the following formula:

$$\mathbf{W}_r = \begin{bmatrix} \alpha_0 & 0 \\ \alpha_1 & 0 \\ \alpha_2 & 0 \\ \alpha_3 & 0 \\ 0 & \alpha_0 \\ 0 & \alpha_1 \\ 0 & \alpha_2 \\ 0 & \alpha_3 \end{bmatrix}^H .$$

Alternatively, in another specific implementation, a vector obtained by taking a conjugate of the first set of beam weights in a reverse order is copied to another group of polarized channels, and 0 vectors are added to the two sets of polarized channel beam weights to form two 8-dimensional vectors $[\alpha_0\ \alpha_1\ \alpha_2\ \alpha_3\ 0\ 0\ 0\ 0]^T$ and $[0\ 0\ 0\ 0\ \alpha_3^*\ \alpha_2^*\ \alpha_1^*\ \alpha_0^*]^T$, so as to form the second matrix $\mathbf{W}_r$. In this case, $\mathbf{W}_r$ may be represented by the following formula:

$$\mathbf{W}_r = \begin{bmatrix} \alpha_0 & 0 \\ \alpha_1 & 0 \\ \alpha_2 & 0 \\ \alpha_3 & 0 \\ 0 & \alpha_3^* \\ 0 & \alpha_2^* \\ 0 & \alpha_1^* \\ 0 & \alpha_0^* \end{bmatrix}^H .$$

Optionally, in another embodiment, a specific implementation of step 101 is: determining the first matrix $\mathbf{W}_r$ according to the eigenvector $[\alpha_0 \; \alpha_1 \; ... \; \alpha_{n-1}]^T$, where $\mathbf{W}_r$ may be represented by the following formula:

$$\mathbf{W}_r = \begin{bmatrix} \alpha_0 & \alpha_{n-1}^* \\ \alpha_1 & \alpha_{n-2}^* \\ ... & ... \\ \alpha_{n-2} & \alpha_1^* \\ \alpha_{n-1} & \alpha_0^* \end{bmatrix}^H$$

where $\alpha_j^*$ is a conjugate of $\alpha_j$, and $0 \leq j \leq n-1$.

For example, it is assumed that the channel eigenvector is $[\alpha_0 \; \alpha_1 \; \alpha_2 \; \alpha_3 \; \alpha_4 \; \alpha_5 \; \alpha_6 \; \alpha_7]^T$. The eigenvector is used as a first 8-dimensional vector, and a vector obtained by taking a conjugate of the first 8-dimensional vector in a reverse order is used as a second 8-dimensional vector $[\alpha_7^* \; \alpha_6^* \; \alpha_5^* \; \alpha_4^* \; \alpha_3^* \; \alpha_2^* \; \alpha_1^* \; \alpha_0^*]^T$. The first matrix $\mathbf{W}_r$ is formed based on the two 8-dimensional vectors, and $\mathbf{W}_r$ may be represented by the following formula:

$$\mathbf{W}_r = \begin{bmatrix} \alpha_0 & \alpha_7^* \\ \alpha_1 & \alpha_6^* \\ \alpha_2 & \alpha_5^* \\ \alpha_3 & \alpha_4^* \\ \alpha_4 & \alpha_3^* \\ \alpha_5 & \alpha_2^* \\ \alpha_6 & \alpha_1^* \\ \alpha_7 & \alpha_0^* \end{bmatrix}^H .$$

Optionally, in another embodiment, a specific implementation of step 101 is: determining the first matrix $\mathbf{W}_r$ according to the eigenvector $[\alpha_0 \; \alpha_1 \; ... \; \alpha_{n-1}]^T$, where

$$W_r = \begin{bmatrix} \alpha_0 & \alpha_{n-1}^* \\ \alpha_1 & \alpha_{n-2}^* \\ \cdots & \cdots \\ \alpha_{k-1} & \alpha_k^* \\ \alpha_k & -\alpha_{k-1}^* \\ \cdots & \cdots \\ \alpha_{n-2} & -\alpha_1^* \\ \alpha_{n-1} & -\alpha_0^* \end{bmatrix}^H .$$

For example, it is assumed that the channel eigenvector is $[\alpha_0\ \alpha_1\ \alpha_2\ \alpha_3\ \alpha_4\ \alpha_5\ \alpha_6\ \alpha_7]^T$. The eigenvector is divided into two sets of polarized channel beam weights according to a polarization direction, which are respectively a first set of beam weights $\alpha_0, \alpha_1, \alpha_2, \alpha_3$ and a second set of beam weights $\alpha_4, \alpha_5, \alpha_6, \alpha_7$. $[\alpha_0\ \alpha_1\ \alpha_2\ \alpha_3\ \alpha_4\ \alpha_5\ \alpha_6\ \alpha7]^T$ is used as a first 8-dimensional vector. A second 8-dimensional vector $[\alpha_7^*\ \alpha_6^*\ \alpha_5^*\ \alpha_4^*\ -\alpha_3^*\ -\alpha_2^*\ -\alpha_1^*\ -\alpha_0^*]^T$ is obtained by transposing the first set of beam weights and the second set of beam weights, taking conjugates of the first set of beam weights and the second set of beam weights separately in a reverse order, and multiplying each weight of the first set of beam weights by -1. The first matrix $W_r$ is formed based on the two 8-dimensional vectors, and $W_r$ may be represented by the following formula:

$$W_r = \begin{bmatrix} \alpha_0 & \alpha_7^* \\ \alpha_1 & \alpha_6^* \\ \alpha_2 & \alpha_5^* \\ \alpha_3 & \alpha_4^* \\ \alpha_4 & -\alpha_3^* \\ \alpha_5 & -\alpha_2^* \\ \alpha_6 & -\alpha_1^* \\ \alpha_7 & -\alpha_0^* \end{bmatrix}^H .$$

Optionally, in the foregoing dual-stream narrow beam weighting embodiment, in step 102, multiple dual-stream randomized encoding matrices such as a dual-stream orthogonal encoding matrix, a dual-stream frequency selection alternating encoding matrix, or a dual-stream open-loop encoding matrix may be used as the second matrix,.

Using the dual-stream orthogonal encoding matrix as an example, the second matrix may be represented by $P_{rb0}^{OL}$ and $P_{rb1}^{OL}$, and forms of $P_{rb0}^{OL}$ and $P_{rb1}^{OL}$ are shown by the following formulas:

$$P_{rb0}^{OL} = \frac{1}{\sqrt{2}}\begin{bmatrix} 1 & 1 \\ 1 & -1 \end{bmatrix}\begin{bmatrix} p_0^0 & 0 \\ 0 & p_0^1 \end{bmatrix}, \quad P_{rb1}^{OL} = \frac{1}{\sqrt{2}}\begin{bmatrix} 1 & -1 \\ 1 & 1 \end{bmatrix}\begin{bmatrix} p_0^0 & 0 \\ 0 & p_0^1 \end{bmatrix};$$

where $\begin{bmatrix} p_0^0 & p_0^1 \end{bmatrix}$ is an equal-amplitude normalized initial vector set, $|p_0^0|^2 + |p_0^1|^2 = 1, |p_0^0| = |p_0^1|$, rb0 represents a frequency domain resource block with an odd index number of the channel of the base station, rb1 represents a frequency domain resource block with an even index number of the channel of the base station, the odd number and the even number are alternate, $P_{rb0}^{OL}$ represents the second matrix used for transmitting a signal on the frequency domain resource block with an odd index number of the channel of the base station, and $P_{rb1}^{OL}$ represents the second matrix used for transmitting a signal on the frequency domain resource block with an even index number of the channel of the base station.

Using the dual-stream frequency selection alternating encoding matrix as an example, the second matrix may

be represented by $\mathbf{P}_{rb0}^{OL}$ and $\mathbf{P}_{rb1}^{OL}$, and forms of $\mathbf{P}_{rb0}^{OL}$ and $\mathbf{P}_{rb0}^{OL}$ are shown by the following formulas:

$$\mathbf{P}_{rb0}^{OL} = \begin{bmatrix} 1 & 0 \\ 0 & 1 \end{bmatrix}\begin{bmatrix} \mathbf{p}_0^0 & 0 \\ 0 & \mathbf{p}_0^1 \end{bmatrix}, \quad \mathbf{P}_{rb1}^{OL} = \begin{bmatrix} 0 & 1 \\ 1 & 0 \end{bmatrix}\begin{bmatrix} \mathbf{p}_0^0 & 0 \\ 0 & \mathbf{p}_0^1 \end{bmatrix};$$

where $\begin{bmatrix} \mathbf{p}_0^0 & \mathbf{p}_0^1 \end{bmatrix}$ is an equal-amplitude normalized initial vector set, $\left|\mathbf{p}_0^0\right|^2 + \left|\mathbf{p}_0^1\right|^2 = 1, \left|\mathbf{p}_0^0\right| = \left|\mathbf{p}_0^1\right|$, rb0 represents a frequency domain resource block with an odd index number of the channel of the base station, rb1 represents a frequency domain resource block with an even index number of the channel of the base station, the odd number and the even number are alternate, $\mathbf{P}_{rb0}^{OL}$ represents the second matrix used for transmitting a signal on the frequency domain resource block with an odd index number of the channel of the base station, and $\mathbf{P}_{rb1}^{OL}$ represents the second matrix used for transmitting a signal on the frequency domain resource block with an even index number of the channel of the base station.

Using the dual-stream open-loop encoding matrix as an example, the second matrix may be represented by $\mathbf{P}_{rbt}^{OL}$, and a form of $\mathbf{P}_{rbt}^{OL}$ is shown in the following formula:

$$\mathbf{P}_{rbt}^{OL} = \frac{1}{\sqrt{2}}\begin{bmatrix} 1 & 0 \\ 0 & e^{it\theta} \end{bmatrix}\begin{bmatrix} 1 & 1 \\ 1 & e^{i\pi} \end{bmatrix}\begin{bmatrix} 1 & 0 \\ 0 & e^{it\theta} \end{bmatrix}\begin{bmatrix} \mathbf{p}_0^0 & 0 \\ 0 & \mathbf{p}_0^1 \end{bmatrix};$$

where i is an imaginary unit, $\theta$ is a phase parameter for delay encoding, t is an index number of a frequency domain resource block of the channel of the base station, $\begin{bmatrix} \mathbf{p}_0^0 & \mathbf{p}_0^1 \end{bmatrix}$ is an equal-amplitude normalized initial vector set, $\left|\mathbf{p}_0^0\right|^2 + \left|\mathbf{p}_0^1\right|^2 = 1, \left|\mathbf{p}_0^0\right| = \left|\mathbf{p}_0^1\right|$, rbt represents a frequency domain resource block with the index number t of the channel of the base station, and $\mathbf{P}_{rbt}^{OL}$ represents the second matrix used for transmitting a signal on the frequency domain resource block with the index number t of the channel of the base station. Preferably, a value of $\theta$ is $\pi/6$.

Certainly, there may also be other multiple dual-stream randomized encoding schemes, and this is not limited in this embodiment of the present invention.

For another example, four n-dimensional vectors may be formed according to the eigenvector, and the first matrix is formed according to the four n-dimensional vectors.

Optionally, in an embodiment, a specific implementation of step 101 is: determining the first matrix $\mathbf{W_r}$ according to the eigenvector $[\alpha_0 \ \alpha_1 \ ... \ \alpha_{n-1}]^T$, where

$$\mathbf{W}_r = \begin{bmatrix} \alpha_0 & \alpha_{n-1}^* & \alpha_k & \alpha_{k-1}^* \\ \alpha_1 & \alpha_{n-2}^* & \cdots & \cdots \\ \cdots & \cdots & \alpha_{n-2} & \alpha_1^* \\ \alpha_{k-1} & \alpha_k^* & \alpha_{n-1} & \alpha_0^* \\ \alpha_k & -\alpha_{k-1}^* & -\alpha_0 & \alpha_{n-1}^* \\ \cdots & \cdots & -\alpha_1 & \alpha_{n-2}^* \\ \alpha_{n-2} & -\alpha_1^* & \cdots & \cdots \\ \alpha_{n-1} & -\alpha_0^* & -\alpha_{k-1} & \alpha_k^* \end{bmatrix}^H$$

where n is an even number, a value of k is n/2, $\alpha_j^*$ is a conjugate of $\alpha_j$, and $0 \leq j \leq n-1$.

It is assumed that the channel eigenvector is $[\alpha_0 \ \alpha_1 \ \alpha_2 \ \alpha_3 \ \alpha_4 \ \alpha_5 \ \alpha_6 \ \alpha_7]^T$. The eigenvector is divided into two sets of polarized channel beam weights according to a polarization direction, which are respectively a first set of beam weights $\alpha_0, \alpha_1, \alpha_2, \alpha_3$, and a second set of beam weights $\alpha_4, \alpha_5, \alpha_6, \alpha_7$. $[\alpha_0 \ \alpha_1 \ \alpha_2 \ \alpha_3 \ \alpha_4 \ \alpha_5 \ \alpha_6 \ \alpha_7]^T$ is used as a first 8-dimensional vector. A second 8-dimensional vector $[\alpha_7{}^* \; \alpha_6{}^* \; \alpha_5{}^* \; \alpha_4{}^* \; -\alpha_3{}^* \; -\alpha_2{}^* \; -\alpha_1{}^* \; -\alpha_0{}^*]^T$ is obtained by transposing the first set of beam weights and the second set of beam weights, taking conjugates of the first set of beam weights and the second set of beam weights separately in a reverse order, and multiplying each weight of the first set of beam weights by -1. A third 8-dimensional vector $[\alpha_4{}^* \; \alpha_5{}^* \; \alpha_6{}^* \; \alpha_7{}^* \; -\alpha_0{}^* \; -\alpha_1{}^* \; -\alpha_2{}^* \; -\alpha_3{}^*]^T$ is obtained by transposing the first set of beam weights and the second set of beam weights, and multiplying each weight of the first set of beam weights by -1. A fourth 8-dimensional vector $[\alpha_3{}^* \; \alpha_2{}^* \; \alpha_1{}^* \; \alpha_0{}^* \; \alpha_7{}^* \; \alpha_6{}^* \; \alpha_5{}^* \; \alpha_4{}^*]^T$ is obtained by taking conjugates of the first set of beam weights and the second set of beam weights separately in a reverse order. The first matrix $\mathbf{W_r}$ is formed based on these four 8-dimensional vectors. A specific form of $\mathbf{W_r}$ is shown in the following formula:

$$\mathbf{W_r} = \begin{bmatrix} \alpha_0 & \alpha_7{}^* & \alpha_4 & \alpha_3{}^* \\ \alpha_1 & \alpha_6{}^* & \alpha_5 & \alpha_2{}^* \\ \alpha_2 & \alpha_5{}^* & \alpha_6 & \alpha_1{}^* \\ \alpha_3 & \alpha_4{}^* & \alpha_7 & \alpha_0{}^* \\ \alpha_4 & -\alpha_3{}^* & -\alpha_0 & \alpha_7{}^* \\ \alpha_5 & -\alpha_2{}^* & -\alpha_1 & \alpha_6{}^* \\ \alpha_6 & -\alpha_1{}^* & -\alpha_2 & \alpha_5{}^* \\ \alpha_7 & -\alpha_0{}^* & -\alpha_3 & \alpha_4{}^* \end{bmatrix}^H .$$

Certainly, there may be another matrix form for four-stream data narrow beam sets and this is not limited in this embodiment of the present invention.

Similarly, in the foregoing four-stream narrow beam weighting embodiment, in step 102, multiple four-stream randomized encoding matrices such as a four-stream orthogonal encoding matrix, a four-stream frequency selection alternating encoding matrix, or a four-stream open-loop encoding matrix may be used as the second matrix.

Using the four-stream orthogonal encoding matrix as an example, the second matrix may be represented by $\mathbf{P}_{rb0}^{OL}$, $\mathbf{P}_{rb1}^{OL}$, $\mathbf{P}_{rb2}^{OL}$, and $\mathbf{P}_{rb3}^{OL}$, and forms of $\mathbf{P}_{rb0}^{OL}$, $\mathbf{P}_{rb2}^{OL}$, $\mathbf{P}_{rb3}^{OL}$ and are shown by the following formulas:

$$\mathbf{P}_{rb0}^{OL} = \frac{1}{2} \begin{bmatrix} 1 & 1 & 1 & 1 \\ 1 & -1 & 1 & -1 \\ 1 & j & -1 & -j \\ 1 & -j & -1 & j \end{bmatrix} \begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb1}^{OL} = \frac{1}{2} \begin{bmatrix} 1 & j & -1 & -j \\ 1 & -j & -1 & j \\ 1 & 1 & 1 & 1 \\ 1 & -1 & 1 & -1 \end{bmatrix} \begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$\mathbf{P}_{rb2}^{OL} = \frac{1}{2} \begin{bmatrix} 1 & 1 & 1 & 1 \\ 1 & -1 & 1 & -1 \\ 1 & j & -1 & -j \\ 1 & -j & -1 & j \end{bmatrix} \begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb3}^{OL} = \frac{1}{2} \begin{bmatrix} 1 & j & -1 & -j \\ 1 & -j & -1 & j \\ 1 & 1 & 1 & 1 \\ 1 & -1 & 1 & -1 \end{bmatrix} \begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

where $\begin{bmatrix} p_0^0 & p_0^1 & p_0^2 & p_0^3 \end{bmatrix}$ is an equal-amplitude normalized initial vector set, $\left| p_0^0 \right| = \left| p_0^1 \right| = \left| p_0^2 \right| = \left| p_0^3 \right|$, $\left| p_0^0 \right|^2 + \left| p_0^1 \right|^2 + \left| p_0^2 \right|^2 + \left| p_0^3 \right|^2 = 1, \left| p_0^0 \right| = \left| p_0^1 \right| = \left| p_0^2 \right| = \left| p_0^3 \right|$, rb0, rb1, rb2, and rb3 respectively represent four types of frequency domain resource blocks with index numbers modulo 4 of the channel of the base station, and $\mathbf{P}_{rb0}^{OL}$, $\mathbf{P}_{rb1}^{OL}$, $\mathbf{P}_{rb2}^{OL}$, and $\mathbf{P}_{rb3}^{OL}$ respectively represent second matrices used for transmitting a signal on the four types of frequency domain resource blocks of the channel of the base station.

Using the four-stream frequency selection alternating encoding matrix as an example, the second matrix may

be represented by $\mathbf{P}_{rb0}^{OL}$, $\mathbf{P}_{rb1}^{OL}$, $\mathbf{P}_{rb2}^{OL}$, and $\mathbf{P}_{rb3}^{OL}$, and forms of $\mathbf{P}_{rb0}^{OL}$, $\mathbf{P}_{rb1}^{OL}$, $\mathbf{P}_{rb2}^{OL}$, and $\mathbf{P}_{rb3}^{OI}$ are shown by the following formulas:

$$\mathbf{P}_{rb0}^{OL} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb1}^{OL} = \begin{bmatrix} 0 & 0 & 0 & 1 \\ 1 & 0 & 0 & 0 \\ 0 & 1 & 0 & 0 \\ 0 & 0 & 1 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$\mathbf{P}_{rb2}^{OL} = \begin{bmatrix} 0 & 0 & 1 & 0 \\ 0 & 0 & 0 & 1 \\ 1 & 0 & 0 & 0 \\ 0 & 1 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb3}^{OL} = \begin{bmatrix} 0 & 1 & 0 & 0 \\ 0 & 0 & 1 & 0 \\ 0 & 0 & 0 & 1 \\ 1 & 0 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

where $\begin{bmatrix} p_0^0 & p_0^1 & p_0^2 & p_0^3 \end{bmatrix}$ is an equal-amplitude normalized initial vector set, $\left| p_0^0 \right| = \left| p_0^1 \right| = \left| p_0^2 \right| = \left| p_0^3 \right|$, $\left| p_0^0 \right|^2 + \left| p_0^1 \right|^2 + \left| p_0^2 \right|^2 + \left| p_0^3 \right|^2 = 1, \left| p_0^0 \right| = \left| p_0^1 \right| = \left| p_0^2 \right| = \left| p_0^3 \right|$, rb0, rb1, rb2, and rb3 respectively represent four types of frequency domain resource blocks with index numbers modulo 4 of the channel of the base station, and $\mathbf{P}_{rb0}^{OL}$, $\mathbf{P}_{rb1}^{OL}$, $\mathbf{P}_{rb2}^{OL}$, and $\mathbf{P}_{rb3}^{OL}$ respectively represent second matrices used for transmitting a signal on the four types of frequency domain resource blocks of the channel of the base station.

Using the four-stream open-loop encoding matrix as an example, the second matrix may be represented by $\mathbf{P}_{rbt}^{OL}$, and a form of $\mathbf{P}_{rbt}^{OL}$ is shown in the following formula:

$$\mathbf{P}_{rbt}^{OL} = \frac{1}{2}\begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix}\begin{bmatrix} 1 & 1 & 1 & 1 \\ 1 & e^{-i2\pi/4} & e^{-i4\pi/4} & e^{-i6\pi/4} \\ 1 & e^{-i4\pi/4} & e^{-i8\pi/4} & e^{-i12\pi/4} \\ 1 & e^{-i6\pi/4} & e^{-i12\pi/4} & e^{-i18\pi/4} \end{bmatrix}\begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

where i is an imaginary unit, θ is a phase parameter for delay encoding, $\begin{bmatrix} p_0^0 & p_0^1 & p_0^2 & p_0^3 \end{bmatrix}$ is an equal-amplitude normalized initial vector set, $\left| p_0^0 \right|^2 + \left| p_0^1 \right|^2 + \left| p_0^2 \right|^2 + \left| p_0^3 \right|^2 = 1, \left| p_0^0 \right| = \left| p_0^1 \right| = \left| p_0^2 \right| = \left| p_0^3 \right|$ k is an index number of a frequency domain resource block of the channel, rbt represents a frequency domain resource block with the index number t of the channel of the base station, and $\mathbf{P}_{rbt}^{OL}$ represents the second matrix used for transmitting a signal on the frequency domain resource block with the index number t of the channel of the base station. Preferably, a value of θ is π/6.

The method in this embodiment of the present invention is further described below with reference to specific embodiments. In the following specific embodiments, a SIMO channel of a base station is used as an example, and an implementation method is performed by the base station.

**Embodiment 1**

When obtaining an uplink channel response of the SIMO channel, the base station may perform channel estimation by directly using a sounding reference signal (Sounding Reference Signal, SRS) of an uplink single output of UE to determine an uplink channel response of the SIMO channel. Certainly, there is a possibility that another reference signal is used to perform uplink channel estimation.

It should be understood that, in this embodiment of the present invention, for the method for obtaining the uplink channel response of the SIMO channel by the base station, refer to the prior art. There may also be another specific implementation, and this is not limited in this embodiment of the present invention.

It is assumed that the SIMO channel is an 8*1 SIMO channel, a main eigenvector obtained by performing SVD decomposition on the uplink channel response is $[\alpha_0 \ \alpha_1 \ \alpha_2 \ \alpha_3 \ \alpha_4 \ \alpha_5 \ \alpha_6 \ \alpha_7]^T$, and dual-stream narrow beam weighting is to be used to perform beamforming. In this case, a source of the SIMO channel may be denoted as $\mathbf{D}=[d_0 \ d_1]$. In addition, a dual-stream beam weight matrix (a first matrix) of the SIMO channel is denoted as $\mathbf{W_r}$.

In this embodiment of the present invention, $[\alpha_0 \ \alpha_1 \ \alpha_2 \ \alpha_3 \ \alpha_4 \ \alpha_5 \ \alpha_6 \ \alpha_7]^T$ may be used as a first 8-dimensional vector. A vector obtained by taking conjugates of sub-vectors of $[\alpha_0 \ \alpha_1 \ \alpha_2 \ \alpha_3 \ \alpha_4 \ \alpha_5 \ \alpha_6 \ \alpha_7]^T$ in a reverse order and performing orthogonalization is used as a second 8-dimensional vector. A dual-stream beam weight matrix (the first matrix) $\mathbf{W_r}$ is generated based on the two 8-dimensional vectors. A specific form of $\mathbf{W_r}$ is shown in the following formula:

$$\mathbf{W}_r = \begin{bmatrix} \alpha_0 & \alpha_7^* \\ \alpha_1 & \alpha_6^* \\ \alpha_2 & \alpha_5^* \\ \alpha_3 & \alpha_4^* \\ \alpha_4 & -\alpha_3^* \\ \alpha_5 & -\alpha_2^* \\ \alpha_6 & -\alpha_1^* \\ \alpha_7 & -\alpha_0^* \end{bmatrix}^H .$$

In addition, in this embodiment of the present invention, a dual-stream randomized encoding (a second matrix) of the SIMO channel may be represented by $\mathbf{P}_{rb0}^{OL}$ and $\mathbf{P}_{rb1}^{OL}$, and specific forms of $\mathbf{P}_{rb0}^{OL}$ and $\mathbf{P}_{rb1}^{OL}$ are shown by the following formulas:

$$\mathbf{P}_{rb0}^{OL} = \begin{bmatrix} 1 & 0 \\ 0 & 1 \end{bmatrix}\begin{bmatrix} p_0^0 & 0 \\ 0 & p_0^1 \end{bmatrix}, \mathbf{P}_{rb1}^{OL} = \begin{bmatrix} 0 & 1 \\ 1 & 0 \end{bmatrix}\begin{bmatrix} p_0^0 & 0 \\ 0 & p_0^1 \end{bmatrix}$$

where $\mathbf{P}_{rb0}^{OL}$ represents a dual-stream randomized encoding matrix (a second matrix) used for transmitting a signal on a frequency domain resource block with an odd index number of the SIMO channel, $\mathbf{P}_{rb1}^{OL}$ represents a dual-stream randomized encoding matrix (a second matrix) used for transmitting a signal on a frequency domain resource block with an even index number of the SIMO channel, and the odd number and the even number are alternate; rb0 represents the frequency domain resource block with an odd index number of the SIMO channel, and rb1 represents the frequency domain resource block with an even index number of the SIMO channel.

In this case, an encoding weighting process of performing beamforming on the SIMO channel is specifically shown in the following formula:

$$\mathbf{S} = \mathbf{D} * \mathbf{P}^{OL} * \mathbf{W}_r$$

where S represents a signal obtained after beamforming is performed on the SIMO channel; $\mathbf{P^{OL}}$ represents dual-stream randomized encoding matrices $\mathbf{P}_{rb0}^{OL}$ and $\mathbf{P}_{rb1}^{OL}$ of the SIMO channel, when an index number of the frequency domain resource block of the SIMO channel is an odd, a value of $\mathbf{P^{OL}}$ is $\mathbf{P}_{rb0}^{OL}$, and when the index number is an even, a value of $\mathbf{P^{OL}}$ is $\mathbf{P}_{rb1}^{OL}$, or when the index number of the frequency domain resource block of the SIMO channel is an odd, a

value of $\mathbf{P^{OL}}$ is $\mathbf{P_{rb1}^{OL}}$ and when the index number is an even, a value of $\mathbf{P^{OL}}$ is $\mathbf{P_{rb0}^{OL}}$.

In addition, in this embodiment of the present invention, a UE uplink signal is not limited to a single-output scenario, and may also be in a dual-output or multiple-output scenario. The base station side may select one channel to receive signal so as to determine the uplink channel response of the SIMO channel.

**Embodiment 2**

Similar to Embodiment 1 of the present invention, it is assumed that the SIMO channel is an 8*1 SIMO channel, a main eigenvector obtained by performing SVD decomposition on an uplink channel response is $[\alpha_0\ \alpha_1\ \alpha_2\ \alpha_3\ \alpha_4\ \alpha_5\ \alpha_6\ \alpha_7]^{\mathbf{T}}$, and dual-stream narrow beam weighting is to be used to perform beamforming. In this case, a source of the SIMO channel may be denoted as $\mathbf{D=[d_0\ d_1]}$. In addition, a dual-stream beam weight matrix (a first matrix) of the SIMO channel is denoted as $\mathbf{W_r}$.

In this embodiment of the present invention, beam weights (sub-vectors) of the vector $[\alpha_0\ \alpha_1\ \alpha_2\ \alpha_3\ \alpha_4\ \alpha_5\ \alpha_6\ \alpha_7]^{\mathbf{T}}$ are first divided into two sets of beam weights according to a polarization direction: $\alpha_1,\alpha_3,\alpha_5,\alpha_6$ and $\alpha_0,\alpha_2,\alpha_4,\alpha_7$. One set of polarized channel beam weights with a greater statistical power is selected from the two sets of beam weights, for example, $\alpha_1,\alpha_3,\alpha_5,\alpha_6$. In this case, a vector 0 may be added to $\alpha_1,\alpha_3,\alpha_5,\alpha_6$ to form a first 8-dimensional vector $[\alpha_1\ \alpha_3\ \alpha_5\ \alpha_6\ 0\ 0\ 0\ 0]^{\mathbf{T}}$; $\alpha_1,\alpha_3,\alpha_5,\alpha_6$ are copied to another polarized channel and 0 is added to $\alpha_1,\alpha_3,\alpha_5,\alpha_6$ to form a second 8-dimensional vector $[0\ 0\ 0\ 0\ \alpha_1\ \alpha_3\ \alpha_5\ \alpha_6]$; and the first matrix $\mathbf{W_r}$ is generated according to the two 8-dimensional vectors. A specific form of $\mathbf{W_r}$ is shown in the following formula:

$$\mathbf{W_r} = \begin{bmatrix} \alpha_1 & 0 \\ \alpha_3 & 0 \\ \alpha_5 & 0 \\ \alpha_6 & 0 \\ 0 & \alpha_1 \\ 0 & \alpha_3 \\ 0 & \alpha_5 \\ 0 & \alpha_6 \end{bmatrix}^{\mathrm{H}}.$$

Alternatively, a vector 0 may be added to $\alpha_1,\alpha_3,\alpha_5,\alpha_6$ to form a first 8-dimensional vector $[\alpha_1\ \alpha_3\ \alpha_5\ \alpha_6\ 0\ 0\ 0\ 0]^{\mathbf{T}}$; a vector obtained by taking conjugates of $\alpha_1,\alpha_3,\alpha_5,\alpha_6$ in a reverse order is copied to another polarized channel and 0 is added to the vector to form a second 8-dimensional vector $[0\ 0\ 0\ 0\ \alpha_6{}^*\ \alpha_5{}^*\ \alpha_3{}^*\ \alpha_1{}^*]$; and the first matrix $\mathbf{W_r}$ is generated according to the two 8-dimensional vectors. A specific form of $\mathbf{W_r}$ is shown in the following formula:

$$\mathbf{W_r} = \begin{bmatrix} \alpha_1 & 0 \\ \alpha_3 & 0 \\ \alpha_5 & 0 \\ \alpha_6 & 0 \\ 0 & \alpha_6{}^* \\ 0 & \alpha_5{}^* \\ 0 & \alpha_3{}^* \\ 0 & \alpha_1{}^* \end{bmatrix}^{\mathrm{H}}.$$

Certainly, it should be understood that, during specific application, there may be another method for calculating the first matrix. For example, an n-dimensional vector is directly input to obtain the first matrix by means of mapping. In this embodiment of the present invention, the process of obtaining the first matrix through calculation by using the n-dimensional vector is only for reference, and this is not limited in this embodiment of the present invention. A process of obtaining a first matrix through calculation in the following embodiment is similar to the process.

In addition, in this embodiment of the present invention, a dual-stream randomized encoding matrix (a second matrix) of the SIMO channel may be represented by $\mathbf{P}_{\mathrm{rbt}}^{\mathbf{OL}}$, and a specific form of $\mathbf{P}_{\mathrm{rbt}}^{\mathbf{OL}}$ is shown in the following formula:

$$\mathbf{P}_{\mathrm{rbt}}^{\mathbf{OL}} = \frac{1}{\sqrt{2}}\begin{bmatrix} 1 & 0 \\ 0 & e^{it\theta} \end{bmatrix}\begin{bmatrix} 1 & 1 \\ 1 & e^{i\pi} \end{bmatrix}\begin{bmatrix} 1 & 0 \\ 0 & e^{it\theta} \end{bmatrix}\begin{bmatrix} p_0^0 & 0 \\ 0 & p_0^1 \end{bmatrix};$$

where i is an imaginary unit, $\theta$ is a phase parameter for delay encoding, $\begin{bmatrix} p_0^0 & p_0^1 \end{bmatrix}$ is an equal-amplitude normalized initial vector set, $\left|p_0^0\right|^2 + \left|p_0^1\right|^2 = 1,$ $\left|p_0^0\right| = \left|p_0^1\right|,$ t is an index number of a frequency domain resource block of the SIMO channel, rbt represents the frequency domain resource block with the index number t of the SIMO channel, and $\mathbf{P}_{\mathrm{rbt}}^{\mathbf{OL}}$ represents the randomized encoding matrix (the second matrix) used for transmitting a signal on the frequency domain resource block with the index number t of the SIMO channel. $\theta$ is a fixed phase value. For example, a value of $\theta$ may be $\pi/12$, $\pi/8$, $\pi/6$, $\pi/4$, $\pi/3$, or the like. Preferably, a value of $\theta$ is $\pi/6$.

In this case, an encoding weighting process of performing beamforming on the SIMO channel is specifically shown in the following formula:

$$S = D * P^{OL} * W_r$$

where S represents a signal obtained after beamforming is performed on the SIMO channel, $\mathbf{P^{OL}}$ represents the dual-stream randomized encoding matrix (the second matrix), and when the index number of the frequency domain resource block of the SIMO channel is t, a value of $\mathbf{P^{OL}}$ used when a signal is transmitted on the frequency domain resource block is $\mathbf{P}_{\mathrm{rbt}}^{\mathbf{OL}}$.

## Embodiment 3

Similar to Embodiment 1 of the present invention, it is assumed that the SIMO channel is an 8*1 SIMO channel, a main eigenvector obtained by performing SVD decomposition on an uplink channel response is $[\alpha_0\ \alpha_1\ \alpha_2\ \alpha_3\ \alpha_4\ \alpha_5\ \alpha_6\ \alpha_7]^{\mathsf{T}}$, and four-stream narrow beam weighting is to be used to perform beamforming. In this case, a source of the SIMO channel may be denoted as $\mathbf{D} = [\mathbf{d_0\ d_1\ d_2\ d_3}]$. In addition, a four-stream beam weight matrix (a first matrix) of the SIMO channel is denoted as $\mathbf{W_r}$.

In this embodiment of present invention, the eigenvector $[\alpha_0\ \alpha_1\ \alpha_2\ \alpha_3\ \alpha_4\ \alpha_5\ \alpha_6\ \alpha_7]^{\mathsf{T}}$ is first divided into two sets of polarized channel beam weights according to a polarization direction, which are respectively a first set of beam weights $\alpha_0,\alpha_1,\alpha_2,\alpha_3$ and a second set of beam weights $\alpha_4,\alpha_5,\alpha_6,\alpha_7$. $[\alpha_0\ \alpha_1\ \alpha_2\ \alpha_3\ \alpha_4\ \alpha_5\ \alpha_6\ \alpha_7]^{\mathsf{T}}$ is used as a first 8-dimensional vector. A second 8-dimensional vector $[\alpha_7^*\ \alpha_6^*\ \alpha_5^*\ \alpha_4^*\ \text{-}\ \alpha_3^*\ \text{-}\ \alpha_2^*\ \text{-}\ \alpha_1^*\ \text{-}\ \alpha_0^*]^{\mathsf{T}}$ is obtained by transposing the first set of beam weights and the second set of beam weights, taking conjugates of the first set of beam weights and the second set of beam weights separately in a reverse order, and multiplying each weight of the first set of beam weights by -1. A third 8-dimensional vector $[\alpha_4^*\ \alpha_5^*\ \alpha_6^*\ \alpha_7^*\ \text{-}\ \alpha_0^*\ \text{-}\ \alpha_1^*\ \text{-}\ \alpha_2^*\ \text{-}\ \alpha_3^*]^{\mathsf{T}}$ is obtained by transposing the first set of beam weights and the second set of beam weights, and multiplying each weight of the first set of beam weights by -1. A fourth 8-dimensional vector $[\alpha_3^*\ \alpha_2^*\ \alpha_1^*\ \alpha_0^*\ \alpha_7^*\ \alpha_6^*\ \alpha_5^*\ \alpha_4^*]^{\mathsf{T}}$ is obtained by taking conjugates of the first set of beam weights and the second set of beam weights separately in a reverse order. The first matrix $\mathbf{W_r}$ is formed based on these four 8-dimensional vectors. A specific form of $\mathbf{W_r}$ is shown in the following formula:

$$\mathbf{W}_r = \begin{bmatrix} \alpha_0 & \alpha_7^* & \alpha_4 & \alpha_3^* \\ \alpha_1 & \alpha_6^* & \alpha_5 & \alpha_2^* \\ \alpha_2 & \alpha_5^* & \alpha_6 & \alpha_1^* \\ \alpha_3 & \alpha_4^* & \alpha_7 & \alpha_0^* \\ \alpha_4 & -\alpha_3^* & -\alpha_0 & \alpha_7^* \\ \alpha_5 & -\alpha_2^* & -\alpha_1 & \alpha_6^* \\ \alpha_6 & -\alpha_1^* & -\alpha_2 & \alpha_5^* \\ \alpha_7 & -\alpha_0^* & -\alpha_3 & \alpha_4^* \end{bmatrix}^H .$$

Certainly, it should be understood that, during specific application, there may be another method for determining the first matrix. For example, an n-dimensional vector is directly input to obtain the first matrix by means of mapping. This embodiment of the present invention shows only one method for calculating the first matrix according to an n-dimensional vector.

In addition, in this embodiment of the present invention, a four-stream randomized encoding matrix (a second matrix) of the SIMO channel may be represented by $\mathbf{P}_{rb0}^{OL}$, $\mathbf{P}_{rb1}^{OL}$, $\mathbf{P}_{rb2}^{OL}$, and $\mathbf{P}_{rb3}^{OL}$, and specific forms are shown in the following formulas:

$$\mathbf{P}_{rb0}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb1}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$\mathbf{P}_{rb2}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb3}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

where $\begin{bmatrix} p_0^0 & p_0^1 & p_0^2 & p_0^3 \end{bmatrix}$ is an equal-amplitude normalized initial vector set, $\left|p_0^0\right| = \left|p_0^1\right| = \left|p_0^2\right| = \left|p_0^3\right|$, $\left|p_0^0\right|^2 + \left|p_0^1\right|^2 + \left|p_0^2\right|^2 + \left|p_0^3\right|^2 = 1$, $\left|p_0^0\right| = \left|p_0^1\right| = \left|p_0^2\right| = \left|p_0^3\right|$ rb0, rb1, rb2, and rb3 respectively represent four types of frequency domain resource blocks with index numbers modulo 4 of the SIMO channel; $\mathbf{P}_{rb0}^{OL}$, $\mathbf{P}_{rb1}^{OL}$, $\mathbf{P}_{rb2}^{OL}$, and $\mathbf{P}_{rb3}^{OL}$ respectively represent randomized encoding matrices (second matrices) used for transmitting a signal on the four types of frequency domain resource blocks of the SIMO channel.

In this case, an encoding weighting process of performing beamforming on the SIMO channel is specifically shown in the following formula:

$$S = D * P^{OL} * W_r$$

where S represents a signal obtained after beamforming is performed on the SIMO channel, $P^{OL}$ represents the four-stream randomized encoding matrix (the second matrix) of the SIMO channel, and when index numbers of the frequency domain resource blocks of the SIMO channel modulo 4 are 0, 1, 2, and 3, and values of $P^{OL}$ used when a signal is transmitted on the frequency domain resource block are $\mathbf{P}_{rb0}^{OL}$, $\mathbf{P}_{rb1}^{OL}$, $\mathbf{P}_{rb2}^{OL}$ and $\mathbf{P}_{rb3}^{OL}$.

**Embodiment 4**

Similar to the specific Embodiment 1 of the present invention, it is assumed that the SIMO channel is an 8*1 SIMO channel, a main eigenvector obtained by performing SVD decomposition on an uplink channel response is $[\alpha_0\ \alpha_1\ \alpha_2\ \alpha_3\ \alpha_4\ \alpha_5\ \alpha_6\ \alpha_7]^T$, and four-stream narrow beam weighting is to be used to perform beamforming. In this case, a source of the SIMO channel may be denoted as $\mathbf{D}=[d_0\ d_1\ d_2\ d_3]$. In addition, a four-stream beam weight matrix (a first matrix) of the SIMO channel is denoted as $\mathbf{W_r}$.

In this embodiment of present invention, for a specific implementation for determining $\mathbf{W_r}$, refer to the method in the specific Embodiment 3 of the present invention, and details are not described herein again. A specific form of $\mathbf{W_r}$ is shown in the following formula:

$$\mathbf{W}_r = \begin{bmatrix} \alpha_0 & \alpha_7^* & \alpha_4 & \alpha_3^* \\ \alpha_1 & \alpha_6^* & \alpha_5 & \alpha_2^* \\ \alpha_2 & \alpha_5^* & \alpha_6 & \alpha_1^* \\ \alpha_3 & \alpha_4^* & \alpha_7 & \alpha_0^* \\ \alpha_4 & -\alpha_3^* & -\alpha_0 & \alpha_7^* \\ \alpha_5 & -\alpha_2^* & -\alpha_1 & \alpha_6^* \\ \alpha_6 & -\alpha_1^* & -\alpha_2 & \alpha_5^* \\ \alpha_7 & -\alpha_0^* & -\alpha_3 & \alpha_4^* \end{bmatrix}^H .$$

In addition, in this embodiment of the present invention, a four-stream randomized encoding matrix (a second matrix) of the SIMO channel may be represented by $\mathbf{P}_{rbt}^{OL}$, and a specific form is shown in the following formula:

$$\mathbf{P}_{rbt}^{OL} = \frac{1}{2} \begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix} \begin{bmatrix} 1 & 1 & 1 & 1 \\ 1 & e^{-i2\pi/4} & e^{-i4\pi/4} & e^{-i6\pi/4} \\ 1 & e^{-i4\pi/4} & e^{-i8\pi/4} & e^{-i12\pi/4} \\ 1 & e^{-i6\pi/4} & e^{-i12\pi/4} & e^{-i18\pi/4} \end{bmatrix} \begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix} \begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix} ;$$

where i is an imaginary unit, $\theta$ is a phase parameter for delay encoding, $\begin{bmatrix} p_0^0 & p_0^1 & p_0^2 & p_0^3 \end{bmatrix}$ is an equal-amplitude normalized initial vector set, $|p_0^0|^2 + |p_0^1|^2 + |p_0^2|^2 + |p_0^3|^2 = 1$, $|p_0^0| = |p_0^1| = |p_0^2| = |p_0^3|$, t is an index number of a frequency domain resource block of the SIMO channel, rbt represents a frequency domain resource block with the index number t of the SIMO channel, and $\mathbf{P}_{rbt}^{OL}$ represents the randomized encoding matrix (the second matrix) used when a signal is transmitted on the frequency domain resource block with the index number t of the SIMO channel. $\theta$ is a fixed phase value. For example, a value of $\theta$ may be $\pi/12$, $\pi/8$, $\pi/6$, $\pi/4$, $\pi/3$, or the like. Preferably, a value of $\theta$ is $\pi/6$.

In this case, an encoding weighting process of performing beamforming on the SIMO channel is specifically shown in the following formula:

$$\mathbf{S}=\mathbf{D} * \mathbf{P}^{OL} * \mathbf{W}_r$$

where S represents a signal obtained after beamforming is performed on the SIMO channel, $\mathbf{P^{OL}}$ represents the four-stream randomized encoding matrix (the second matrix) of the SIMO channel, and when the index number of the frequency domain resource block of the SIMO channel is t, a value of $\mathbf{P}^{\mathbf{OL}}$ used when a signal is transmitted on the frequency domain resource block is $\mathbf{P}^{\mathbf{OL}}_{\mathbf{rbt}}$.

FIG. 2 is a schematic structural diagram of a base station 200 according to an embodiment of the present invention. The base station 200 may include: a first determining unit 201, a second determining unit 202, and a channel correction unit 203.

The first determining unit 201 determines a first matrix according to an eigenvector. The eigenvector is a main eigenvector obtained by performing eigenvector decomposition on an uplink channel response of a channel of the base station. The eigenvector is an n-dimensional vector, and n is a quantity of transmit channels of the channel of the base station. The first matrix is an n*m beam weight matrix. Each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1. N-dimensional vectors formed by any two rows of elements of the first matrix are uncorrelated, m is a positive integer, and 1<m≤n. The channel of the base station is a single-input multiple-output SIMO channel of the base station or one SIMO channel decomposed from a multiple-input multiple-output MIMO channel of the base station.

The second determining unit 202 is configured to determine a second matrix. The second matrix is an m*m matrix and is used to perform randomized encoding on a transmit signal of the channel of the base station with reference to the first matrix.

The channel correction unit 203 is configured to perform beamforming on a transmit channel of the channel of the base station according to the first matrix and the second matrix.

According to this embodiment of the present invention, the base station 200 reconstructs an n-dimensional main eigenvector obtained by performing eigenvector decomposition on an uplink channel response of the SIMO channel to obtain multiple uncorrelated n-dimensional vectors; constructs a multi-stream beam weight matrix according to the multiple n-dimensional vectors, so as to determine a randomized encoding matrix of the multi-stream beam weight matrix; and performs beamforming on a transmit channel of the SIMO channel according to the multi-stream beam weight matrix and the randomized encoding matrix. In this way, when a terminal uses an uplink single output, beamforming can be performed on a multi-stream transmit channel of the base station according to the uplink channel response of the SIMO channel of the base station. This maintains a relatively stable channel correction effect and improves robustness of multi-stream BF performance.

In addition, the base station 200 may further perform the methods in FIG. 1 and in the specific Embodiments 1 to 4 of the present invention, and implement base station functions in the embodiment shown in FIG. 1 and in the specific Embodiments 1 to 4 of the present invention. This is not described herein again.

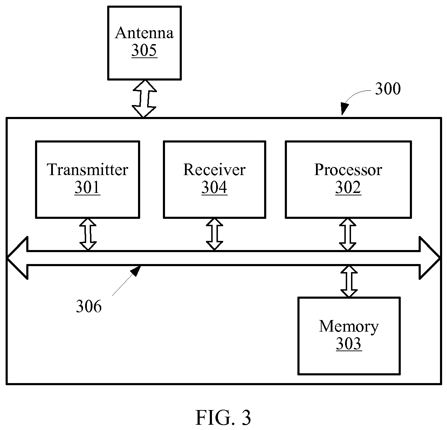

FIG. 3 is a schematic structural diagram of a base station 300 according to an embodiment of the present invention. The base station 300 may include a processor 302, a memory 303, a transmitter 301, and a receiver 304. During specific application, the base station 300 may be a.

The receiver 304, the transmitter 301, the processor 302, and the memory 303 are interconnected by using a bus 306 system. The bus 306 may be an ISA bus, a PCI bus, an EISA bus, or the like. The bus may be an address bus, a data bus, a control bus, or the like. For ease of denotation, the bus is represented by using only one double-headed arrow in FIG. 3. However, it does not indicate that there is only one bus or only one type of bus. During specific application, the transmitter 301 and the receiver 304 may be coupled to an antenna 305.

The memory 303 is configured to store a program. Specifically, the program may include program code, and the program code includes a computer operation instruction. The memory 303 may include a read-only memory and a random access memory and provide an instruction and data for the processor 302. The memory 303 may include a high speed RAM memory, and may further include a non-volatile memory (non-volatile memory), for example, at least one magnetic disk memory.

The processor 302 executes the program stored in the memory 303 and is specifically configured to perform the following operations:

determining a first matrix according to an eigenvector, where the eigenvector is a main eigenvector obtained by performing eigenvector decomposition on an uplink channel response of a channel of a base station, the eigenvector is an n-dimensional vector, and n is a quantity of transmit channels of the channel of the base station; the first matrix is an n*m beam weight matrix, each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1, n-dimensional vectors formed by any two rows of elements of the first matrix are uncorrelated, m is a positive integer, 1<m≤n, and the channel of the base station is a single-input multiple-output SIMO channel of the base station or one SIMO channel decomposed from a multiple-input multiple-output MIMO channel of the base station;

determining a second matrix, where the second matrix is an m*m matrix and is used to perform randomized encoding on a transmit signal of the channel of the base station with reference to the first matrix; and

performing beamforming on a transmit channel of the channel of the base station according to the first matrix and the second matrix. The foregoing method executed by the base station disclosed in any embodiment of the present invention in FIG. 1 and in the specific embodiments 1 to 4 of the present invention can be applied to the processor 302 or implemented by the processor 302. The processor 302 may be an integrated circuit chip and has a signal processing capability. In an implementation process, all steps of the foregoing methods may be completed by using an integrated logic circuit of hardware in the processor 302 or by using an instruction in a software form. The processor 302 may be a general purpose processor, including a central processing unit (Central Processing Unit, CPU for short), a network processor (Network Processor, NP for short), and the like, may further be a digital signal processor (DSP), an application-specific integrated circuit (ASIC), a field programmable gate array (FPGA) or another programmable logical device, a discrete gate or a transistor logical device, or a discrete hardware component, and can implement or execute the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be executed and completed by a hardware encoding processor, or may be executed and completed by using a combination of hardware and software modules in an encoding processor. The software module may be located in a mature storage medium in the art such as a random access memory, a flash memory, a read-only memory, a programmable read-only memory, an electrically erasable programmable memory, or a register. The storage medium is located in the memory 303. The processor 302 reads information in the memory 303, and completes the steps of the foregoing methods with reference to hardware of the processor 302.

According to this embodiment of the present invention, the base station 300 reconstructs an n-dimensional main eigenvector obtained by performing eigenvector decomposition on an uplink channel response of the SIMO channel to obtain multiple uncorrelated n-dimensional vectors; constructs a multi-stream beam weight matrix according to the multiple n-dimensional vectors, so as to determine a randomized encoding matrix of the multi-stream beam weight matrix; and performs beamforming on a transmit channel of the SIMO channel according to the multi-stream beam weight matrix and the randomized encoding matrix. In this way, when a terminal uses an uplink single output, beamforming can be performed on a multi-stream transmit channel of the base station according to the uplink channel response of the SIMO channel of the base station. This maintains a relatively stable channel correction effect and improves robustness of multi-stream BF performance.

In addition, the base station 300 may further execute the methods in FIG. 1 and in the specific Embodiments 1 to 4 of the present invention, and implement base station functions in the embodiment shown in FIG. 1 and in the specific Embodiments 1 to 4 of the present invention.

This is not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention. Methods or steps described in the embodiments disclosed in this specification may be implemented by hardware, a software program executed by a processor, or a combination thereof. The software program may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The present invention is described in detail with reference to the accompany drawings and in combination with the exemplary embodiments, but the present invention is not limited thereto.

**Claims**

1. A base station (200), comprising:

a first determining unit (201), configured to determine a first matrix according to an eigenvector, wherein the eigenvector is a main eigenvector obtained by performing eigenvector decomposition on an uplink channel response of a channel of the base station, the eigenvector is an n-dimensional vector, n is a quantity of transmit channels of the channel of the base station, the first matrix is an n*m beam weight matrix, each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1, n-dimensional vectors formed by any two rows of elements of the first matrix are uncorrelated, m is a positive integer, $1 < m \leq n$, and the channel of the base station is a single-input multiple-output, SIMO, channel of the base station or one SIMO channel decomposed from a multiple-input multiple-output, MIMO, channel of the base station;

a second determining unit (202), configured to determine a second matrix, wherein the second matrix is an m*m matrix and is used to perform randomized encoding on a transmit signal of the channel of the base station with reference to the first matrix; and

a channel correction unit (203), configured to perform beamforming on a transmit channel of the channel of the base station according to the product of the first matrix and the second matrix.

2. The base station (200) according to claim 1, wherein the first determining unit (201) is specifically configured to:

when a value of m is 2, divide the eigenvector $[\alpha_0 \ \alpha_1 \ ... \ \alpha_{n-1}]^T$ into a first set of beam weights $\alpha_{x(0)}, \alpha_{x(1)}, ...,$ $\alpha_{x(k-1)}$ and a second set of beam weights $\alpha_{x(k)}, \alpha_{x(k+1)}, ..., \alpha_{x(n-1)}$ according to a polarization direction, wherein n is an even number, a value of k is n/2, and x(0) to x(n-1) is an arrangement manner of 0 to n-1; and

determine the first matrix $\mathbf{W_r}$ according to the first set of beam weights and the second set of beam weights, wherein $\mathbf{W_r}$ is represented by the following formula:

$$\mathbf{W_r} = \begin{bmatrix} \alpha_{x(0)} & 0 \\ \alpha_{x(1)} & 0 \\ ... & 0 \\ \alpha_{x(k-1)} & 0 \\ 0 & \alpha_{x(k)} \\ 0 & ... \\ 0 & \alpha_{x(n-2)} \\ 0 & \alpha_{x(n-1)} \end{bmatrix}^H .$$

3. The base station (200) according to claim 1, wherein the first determining unit (201) is specifically configured to:

when a value of m is 2, divide the eigenvector $[\alpha_0 \ \alpha_1 \ ... \ \alpha_{n-1}]^T$ into a first set of beam weights $\alpha_{x(0)}, \alpha_{x(1)}, ...,$ $\alpha_{x(k-1)}$ and a second set of beam weights $\alpha_{x(k)}, \alpha_{x(k+1)}, ..., \alpha_{x(n-1)}$ according to a polarization direction, wherein n is an even number, a value of k is n/2, and x(0) to x(n-1) is an arrangement manner of 0 to n-1; and

determine the first matrix $\mathbf{W_r}$ according to the first set of beam weights, wherein the first set of beam weights is a set of beam weights with a greater statistical power of the first set of beam weights and the second set of beam weights, and $\mathbf{W_r}$ is represented by the following formula:

$$\mathbf{W_r} = \begin{bmatrix} \alpha_{x(0)} & 0 \\ \alpha_{x(1)} & 0 \\ ... & 0 \\ \alpha_{x(k-1)} & 0 \\ 0 & \alpha_{x(0)} \\ 0 & \alpha_{x(1)} \\ 0 & ... \\ 0 & \alpha_{x(k-1)} \end{bmatrix}^H ,$$

or

$$W_r = \begin{bmatrix} \alpha_{s(0)} & 0 \\ \alpha_{s(1)} & 0 \\ \cdots & 0 \\ \alpha_{s(1-1)} & 0 \\ 0 & \alpha_{s(1-1)}^* \\ 0 & \cdots \\ 0 & \alpha_{s(1)}^* \\ 0 & \alpha_{s(0)}^* \end{bmatrix}^H .$$

4. The base station (200) according to claim 1, wherein the first determining unit (201) is specifically configured to:

when a value of m is 2, determine the first matrix $W_r$ according to the eigenvector $[\alpha_0 \ \alpha_1 \ ... \ \alpha_{n-1}]^T$, wherein $W_r$ is represented by the following formula:

$$W_r = \begin{bmatrix} \alpha_0 & \alpha_{n-1}^* \\ \alpha_1 & \alpha_{n-2}^* \\ \cdots & \cdots \\ \alpha_{n-2} & \alpha_1^* \\ \alpha_{n-1} & \alpha_0^* \end{bmatrix}^H$$

wherein $\alpha_j^*$ is a conjugate of $\alpha_j$, and $0 \leq j \leq n-1$.

5. The base station (200) according to claim 1, wherein the first determining unit (201) is specifically configured to:

when a value of m is 2, determine the first matrix $W_r$ according to the eigenvector $[\alpha_0 \ \alpha_1 \ ... \ \alpha_{n-1}]^T$, wherein $W_r$ is represented by the following formula:

$$W_r = \begin{bmatrix} \alpha_0 & \alpha_{n-1}^* \\ \alpha_1 & \alpha_{n-2}^* \\ \cdots & \cdots \\ \alpha_{k-1} & \alpha_k^* \\ \alpha_k & -\alpha_{k-1}^* \\ \cdots & \cdots \\ \alpha_{n-2} & -\alpha_1^* \\ \alpha_{n-1} & -\alpha_0^* \end{bmatrix}^H$$

wherein n is an even number, a value of k is n/2, $\alpha_j^*$ is a conjugate of $\alpha_j$, and $0 \leq j \leq n-1$.

6. The base station (200) according to any one of claims 1 to 5, wherein the second determining unit (202) is specifically configured to determine the second matrix, wherein the second matrix is represented by $P_{rb0}^{OL}$ and $P_{rb1}^{OL}$, and

$P_{rb0}^{OL}$ and $P_{rb1}^{OL}$ are represented by the following formulas:

$$\mathbf{P}_{rb0}^{OL} = \frac{1}{\sqrt{2}} \begin{bmatrix} 1 & 1 \\ 1 & -1 \end{bmatrix} \begin{bmatrix} p_0^0 & 0 \\ 0 & p_0^1 \end{bmatrix}, \quad \mathbf{P}_{rb1}^{OL} = \frac{1}{\sqrt{2}} \begin{bmatrix} 1 & -1 \\ 1 & 1 \end{bmatrix} \begin{bmatrix} p_0^0 & 0 \\ 0 & p_0^1 \end{bmatrix};$$

or

$$\mathbf{P}_{rb0}^{OL} = \begin{bmatrix} 1 & 0 \\ 0 & 1 \end{bmatrix} \begin{bmatrix} p_0^0 & 0 \\ 0 & p_0^1 \end{bmatrix}, \quad \mathbf{P}_{rb1}^{OL} = \begin{bmatrix} 0 & 1 \\ 1 & 0 \end{bmatrix} \begin{bmatrix} p_0^0 & 0 \\ 0 & p_0^1 \end{bmatrix};$$

wherein $\begin{bmatrix} p_0^0 & p_0^1 \end{bmatrix}$ is an equal-amplitude normalized initial vector set, $\left|p_0^0\right|^2 + \left|p_0^1\right|^2 = 1$, $\left|p_0^0\right| = \left|p_0^1\right|$, rb0 represents a frequency domain resource block with an odd index number of the channel of the base station, rb1 represents a frequency domain resource block with an even index number of the channel of the base station, the odd number and the even number are alternate, $\mathbf{P}_{rb0}^{OL}$ represents the second matrix used for transmitting a signal on the frequency domain resource block with an odd index number of the channel of the base station, and $\mathbf{P}_{rb1}^{OL}$ represents the second matrix used for transmitting a signal on the frequency domain resource block with an even index number of the channel of the base station.

7. The base station (200) according to any one of claims 1 to 5, wherein the second determining unit (202) is specifically configured to determine the second matrix, wherein the second matrix is represented by $\mathbf{P}_{rbt}^{OL}$, and $\mathbf{P}_{rbt}^{OL}$ is represented by the following formula:

$$\mathbf{P}_{rbt}^{OL} = \frac{1}{\sqrt{2}} \begin{bmatrix} 1 & 0 \\ 0 & e^{it\theta} \end{bmatrix} \begin{bmatrix} 1 & 1 \\ 1 & e^{i\pi} \end{bmatrix} \begin{bmatrix} 1 & 0 \\ 0 & e^{it\theta} \end{bmatrix} \begin{bmatrix} p_0^0 & 0 \\ 0 & p_0^1 \end{bmatrix};$$

wherein i is an imaginary unit, $\theta$ is a phase parameter for delay encoding, t is an index number of a frequency domain resource block of the channel of the base station, $\begin{bmatrix} p_0^0 & p_0^1 \end{bmatrix}$ is an equal-amplitude normalized initial vector set, $\left|p_0^0\right|^2 + \left|p_0^1\right|^2 = 1$, $\left|p_0^0\right| = \left|p_0^1\right|$, rbt represents a frequency domain resource block with the index number t of the channel of the base station, and $\mathbf{P}_{rbt}^{OL}$ represents the second matrix used for transmitting a signal on the frequency domain resource block with the index number t of the channel of the base station.

8. The base station (200) according to claim 1, wherein the first determining unit (201) is specifically configured to:

when a value of m is 4, determine the first matrix $\mathbf{W_r}$ according to the eigenvector $[\alpha_0 \ \alpha_1 \ ... \ \alpha_{n-1}]^T$, wherein $\mathbf{W_r}$ is represented by the following formula:

$$W_r = \begin{bmatrix} \alpha_0 & \alpha_{n-1}^* & \alpha_k & \alpha_{k-1}^* \\ \alpha_1 & \alpha_{n-2}^* & \cdots & \cdots \\ \cdots & \cdots & \alpha_{n-2} & \alpha_1^* \\ \alpha_{k-1} & \alpha_k^* & \alpha_{n-1} & \alpha_0^* \\ \alpha_k & -\alpha_{k-1}^* & -\alpha_0 & \alpha_{n-1}^* \\ \cdots & \cdots & -\alpha_1 & \alpha_{n-2}^* \\ \alpha_{n-2} & -\alpha_1^* & \cdots & \cdots \\ \alpha_{n-1} & -\alpha_0^* & -\alpha_{k-1} & \alpha_k^* \end{bmatrix}^H$$

wherein n is an even number, a value of k is n/2, $\alpha_j^*$ is a conjugate of $\alpha_j$, and $0 \le j \le n-1$.

9. The base station (200) according to claim 1 or 8, wherein the second determining unit (202) is specifically configured to determine the second matrix, wherein the second matrix is represented by $\mathbf{P}_{rb0}^{OL}$, $\mathbf{P}_{rb1}^{OL}$, $\mathbf{P}_{rb2}^{OL}$ and $\mathbf{P}_{rb3}^{OL}$,

and $\mathbf{P}_{rb0}^{OL}$, $\mathbf{P}_{rb1}^{OL}$, $\mathbf{P}_{rb2}^{OL}$, and $\mathbf{P}_{rb3}^{OL}$ are represented by the following formulas:

$$\mathbf{P}_{rb0}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb1}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$\mathbf{P}_{rb2}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb3}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

or

$$\mathbf{P}_{rb0}^{OL} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb1}^{OL} = \begin{bmatrix} 0 & 0 & 0 & 1 \\ 1 & 0 & 0 & 0 \\ 0 & 1 & 0 & 0 \\ 0 & 0 & 1 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$\mathbf{P}_{rb2}^{OL} = \begin{bmatrix} 0 & 0 & 1 & 0 \\ 0 & 0 & 0 & 1 \\ 1 & 0 & 0 & 0 \\ 0 & 1 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad \mathbf{P}_{rb3}^{OL} = \begin{bmatrix} 0 & 1 & 0 & 0 \\ 0 & 0 & 1 & 0 \\ 0 & 0 & 0 & 1 \\ 1 & 0 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

wherein $\begin{bmatrix} p_0^0 & p_0^1 & p_0^2 & p_0^3 \end{bmatrix}$ is an equal-amplitude normalized initial vector set, $|p_0^0| = |p_0^1| = |p_0^2| = |p_0^3|$,

$|p_0^0|^2 + |p_0^1|^2 + |p_0^2|^2 + |p_0^3|^2 = 1$, $|p_0^0| = |p_0^1| = |p_0^2| = |p_0^3|$ rb0, rb1, rb2, and rb3 respectively represent four types of frequency domain resource blocks with index numbers modulo 4 of the channel of the base station, and

$\mathbf{P}^{OL}_{rb0}$, $\mathbf{P}^{OL}_{rb1}$, $\mathbf{P}^{OL}_{rb2}$, and $\mathbf{P}^{OL}_{rb3}$ respectively represent second matrices used for transmitting a signal on the four types of frequency domain resource blocks of the channel of the base station.

10. The base station (200) according to claim 1 or 8, wherein the second determining unit (202) is specifically configured to determine the second matrix, wherein the second matrix is represented by $\mathbf{P}^{OL}_{rbt}$, and $\mathbf{P}^{OL}_{rbt}$ is represented by the following formula:

$$\mathbf{P}^{OL}_{rbt} = \frac{1}{2}\begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix}\begin{bmatrix} 1 & 1 & 1 & 1 \\ 1 & e^{-i2\pi/4} & e^{-i4\pi/4} & e^{-i6\pi/4} \\ 1 & e^{-i4\pi/4} & e^{-i8\pi/4} & e^{-i12\pi/4} \\ 1 & e^{-i6\pi/4} & e^{-i12\pi/4} & e^{-i18\pi/4} \end{bmatrix}\begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

wherein i is an imaginary unit, $\theta$ is a phase parameter for delay encoding, t is an index number of a frequency domain resource block of the channel of the base station, $\begin{bmatrix} p_0^0 & p_0^1 & p_0^2 & p_0^3 \end{bmatrix}$ is an equal-amplitude normalized initial vector set, $\left|p_0^0\right|^2 + \left|p_0^1\right|^2 + \left|p_0^2\right|^2 + \left|p_0^3\right|^2 = 1$, $\left|p_0^0\right| = \left|p_0^1\right| = \left|p_0^2\right| = \left|p_0^3\right|$, rbt represents a frequency domain resource block with the index number t of the channel of the base station, and $\mathbf{P}^{OL}_{rbt}$ represents the second matrix used for transmitting a signal on the frequency domain resource block with the index number t of the channel of the base station.

11. A directional-beam-based open-loop multi-stream transmission method, comprising:

determining (101) a first matrix according to an eigenvector, wherein the eigenvector is a main eigenvector obtained by performing eigenvector decomposition on an uplink channel response of a channel of a base station, the eigenvector is an n-dimensional vector, n is a quantity of transmit channels of the channel of the base station, the first matrix is an n*m beam weight matrix, each non-zero element of the first matrix is a sub-vector of the eigenvector, a value obtained after a sub-vector of the eigenvector is multiplied by -1, a conjugate of a sub-vector of the eigenvector, or a value obtained after a conjugate of a sub-vector of the eigenvector is multiplied by -1, n-dimensional vectors formed by any two rows of elements of the first matrix are uncorrelated, m is a positive integer, 1<m≤n, and the channel of the base station is a single-input multiple-output, SIMO, channel of the base station or one SIMO channel decomposed from a multiple-input multiple-output, MIMO, channel of the base station;
determining (102) a second matrix, wherein the second matrix is an m*m matrix and is used to perform randomized encoding on a transmit signal of the channel of the base station with reference to the first matrix; and
performing (103) beamforming on a transmit channel of the channel of the base station according to the product of the first matrix and the second matrix.

12. The method according to claim 11, wherein, when a value of m is 2, the determining (101) a first matrix according to an eigenvector comprises:

dividing the eigenvector $[\alpha_0\ \alpha_1\ ...\ \alpha_{n-1}]^T$ into a first set of beam weights $\alpha_{x(0)}$, $\alpha_{x(1)}$,..., $\alpha_{x(k-1)}$ and a second set of beam weights $\alpha_{x(k)}$, $\alpha_{x(k+1)}$,..., $\alpha_{x(n-1)}$ according to a polarization direction, wherein n is an even number, a value of k is n/2, and x(0) to x(n-1) is an arrangement manner of 0 to n-1; and
determining the first matrix $\mathbf{W_r}$ according to the first set of beam weights and the second set of beam weights, wherein $\mathbf{W_r}$ is represented by the following formula:

$$\mathbf{W_r} = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k)} \\ 0 & \cdots \\ 0 & \alpha_{x(n-2)} \\ 0 & \alpha_{x(n-1)} \end{bmatrix}^H .$$

13. The method according to claim 11, wherein, when a value of m is 2, the determining (101) a first matrix according to an eigenvector comprises:

dividing the eigenvector $[\alpha_0 \ \alpha_1 \ ... \ \alpha_{n-1}]^T$ into a first set of beam weights $\alpha_{x(0)}, \alpha_{x(1)}, ..., \alpha_{x(k-1)}$ and a second set of beam weights $\alpha_{x(k)}, \alpha_{x(k+1)}, ..., \alpha_{x(n-1)}$ according to a polarization direction, wherein n is an even number, a value of k is n/2, and x(0) to x(n-1) is an arrangement manner of 0 to n-1; and
determining the first matrix $\mathbf{W_r}$ according to the first set of beam weights, wherein the first set of beam weights is a set of beam weights with a greater statistical power of the first set of beam weights and the second set of beam weights, and

$$\mathbf{W_r} = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(0)} \\ 0 & \alpha_{x(1)} \\ 0 & \cdots \\ 0 & \alpha_{x(k-1)} \end{bmatrix}^H ,$$

or

$$\mathbf{W_r} = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k-1)}^* \\ 0 & \cdots \\ 0 & \alpha_{x(1)}^* \\ 0 & \alpha_{x(0)}^* \end{bmatrix}^H .$$

14. The method according to claim 11, wherein, when a value of m is 2, the determining (101) a first matrix according to an eigenvector comprises:

determining the first matrix $\mathbf{W_r}$ according to the eigenvector $[\alpha_0 \ \alpha_1 \ ... \ \alpha_{n-1}]^T$, wherein $\mathbf{W_r}$ is represented by the following formula:

$$W_r = \begin{bmatrix} \alpha_0 & \alpha_{n-1}^* \\ \alpha_1 & \alpha_{n-2}^* \\ \dots & \dots \\ \alpha_{n-2} & \alpha_1^* \\ \alpha_{n-1} & \alpha_0^* \end{bmatrix}^H$$

wherein $\alpha_j^*$ is a conjugate of $\alpha_j$, and $0 \leq j \leq n-1$.

15. The method according to claim 11, wherein, when a value of m is 2, the determining (101) a first matrix according to an eigenvector comprises:

determining the first matrix $W_r$ according to the eigenvector $[\alpha_0 \ \alpha_1 \ \dots \ \alpha_{n-1}]^T$, wherein $W_r$ is represented by the following formula:

$$W_r = \begin{bmatrix} \alpha_0 & \alpha_{n-1}^* \\ \alpha_1 & \alpha_{n-2}^* \\ \dots & \dots \\ \alpha_{k-1} & \alpha_k^* \\ \alpha_k & -\alpha_{k-1}^* \\ \dots & \dots \\ \alpha_{n-2} & -\alpha_1^* \\ \alpha_{n-1} & -\alpha_0^* \end{bmatrix}^H$$

wherein n is an even number, a value of k is n/2, $\alpha_j^*$ is a conjugate of $\alpha_j$, and $0 \leq j \leq n-1$.

**Patentansprüche**

1. Basisstation (200), die Folgendes umfasst:

eine erste Bestimmungseinheit (201), ausgelegt zum Bestimmen einer ersten Matrix entsprechend einem Eigenvektor, wobei der Eigenvektor ein Haupteigenvektor ist, der durch Durchführen einer Eigenvektorzerlegung auf einer Uplink-Kanalantwort eines Kanals der Basisstation erhalten wird, der Eigenvektor ein n-dimensionaler Vektor ist, n eine Anzahl von Sendekanälen des Kanals der Basisstation ist, die erste Matrix eine n*m-Strahlgewichtungsmatrix ist, jedes Nicht-Null-Element der ersten Matrix ein Teilvektor des Eigenvektors, ein Wert, der erhalten wird, nachdem ein Teilvektor des Eigenvektors mit -1 multipliziert wird, ein Konjugiertes eines Teilvektors des Eigenvektors oder ein Wert, der erhalten wird, nachdem ein Konjugiertes eines Teilvektors des Eigenvektors mit -1 multipliziert wird, ist, n-dimensionale Vektoren, die durch beliebige zwei Zeilen von Elementen der ersten Matrix gebildet werden, nicht korreliert sind, m eine positive ganze Zahl ist, 1<m≤n und der Kanal der Basisstation ein SIMO-Kanal (Single-Input, Multiple-Output) mit einem Eingang und mehreren Ausgängen der Basisstation oder ein SIMO-Kanal, zerlegt aus einem MIMO-Kanal (Multiple-Input, Multiple-Output) mit mehreren Eingängen und mehreren Ausgängen der Basisstation ist;
eine zweite Bestimmungseinheit (202), ausgelegt zum Bestimmen einer zweiten Matrix, wobei die zweite Matrix eine m*m-Matrix ist und verwendet wird, um randomisierte Codierung auf einem Sendesignal des Kanals der Basisstation bezüglich der ersten Matrix durchzuführen; und
eine Kanalkorrektureinheit (203), ausgelegt zum Durchführen von Beamforming auf einem Sendekanal der Basisstation entsprechend dem Produkt aus der ersten Matrix und der zweiten Matrix.

2. Basisstation (200) nach Anspruch 1, wobei die erste Bestimmungseinheit (201) spezifisch ausgelegt ist zum:

wenn ein Wert von m gleich 2 ist, den Eigenvektor $[\alpha_0\ \alpha_1\ ...\ \alpha_{n-1}]^T$ in eine erste Menge von Strahlgewichten $\alpha_{x(0)},\ \alpha_{x(1)},...,\ \alpha_{x(k-1)}$ und eine zweite Menge von Strahlgewichten $\alpha_{x(k)},\ \alpha_{x(k+1)},...,\ \alpha_{x(n-1)}$ entsprechend einer Polarisierungsrichtung aufzuteilen, wobei n eine gerade Zahl ist, ein Wert von k gleich n/2 ist und x(0) bis x(n-1) eine Anordnungsweise von 0 bis n-1 ist; und

Bestimmen der ersten Matrix $W_r$ entsprechend der ersten Menge von Strahlgewichten und der zweiten Menge von Strahlgewichten, wobei $W_r$ durch die folgende Formel dargestellt wird:

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k)} \\ 0 & \cdots \\ 0 & \alpha_{x(n-2)} \\ 0 & \alpha_{x(n-1)} \end{bmatrix}^H .$$

3. Basisstation (200) nach Anspruch 1, wobei die erste Bestimmungseinheit (201) spezifisch ausgelegt ist zum:

wenn ein Wert von m gleich 2 ist, Aufteilen des Eigenvektors $[\alpha_0\ \alpha_1\ ...\ \alpha_{n-1}]^T$ in eine erste Menge von Strahlgewichten $\alpha_{x(0)},\ \alpha_{x(1)},...,\ \alpha_{x(k-1)}$ und eine zweite Menge von Strahlgewichten $\alpha_{x(k)},\ \alpha_{x(k+1)},...,\ \alpha_{x(n-1)}$ entsprechend einer Polarisierungsrichtung, wobei n eine gerade Zahl ist, ein Wert von k gleich n/2 ist und x(0) bis x(n-1) eine Anordnungsweise von 0 bis n-1 ist; und

Bestimmen der ersten Matrix $W_r$ entsprechend der ersten Menge von Strahlgewichten, wobei die erste Menge von Strahlgewichten eine Menge von Strahlgewichten mit einer größeren statistischen Güte aus der ersten Menge von Strahlgewichten und der zweiten Menge von Strahlgewichten ist, und $W_r$ durch die folgende Formel dargestellt ist:

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(0)} \\ 0 & \alpha_{x(1)} \\ 0 & \cdots \\ 0 & \alpha_{x(k-1)} \end{bmatrix}^H ,$$

or

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k-1)}^* \\ 0 & \cdots \\ 0 & \alpha_{x(1)}^* \\ 0 & \alpha_{x(0)}^* \end{bmatrix}^H .$$

4. Basisstation (200) nach Anspruch 1, wobei die erste Bestimmungseinheit (201) spezifisch ausgelegt ist zum:

   wenn ein Wert von m gleich 2 ist, Bestimmen der ersten Matrix $W_r$ entsprechend dem Eigenvektor $[\alpha_0 \; \alpha_1 \; ... \; \alpha_{n-1}]^T$, wobei $W_r$ durch die folgende Formel dargestellt ist:

$$\mathbf{W}_r = \begin{bmatrix} \alpha_0 & \alpha_{n-1}^* \\ \alpha_1 & \alpha_{n-2}^* \\ ... & ... \\ \alpha_{n-2} & \alpha_1^* \\ \alpha_{n-1} & \alpha_0^* \end{bmatrix}^H$$

   wobei $\alpha_j^*$ ein Konjugiertes von $\alpha_j$ ist und $0 \leq j \leq n-1$.

5. Basisstation (200) nach Anspruch 1, wobei die erste Bestimmungseinheit (201) spezifisch ausgelegt ist zum:

   wenn ein Wert von m gleich 2 ist, Bestimmen der ersten Matrix $W_r$ entsprechend dem Eigenvektor $[\alpha_0 \; \alpha_1 \; ... \; \alpha_{n-1}]^T$, wobei $W_r$ durch die folgende Formel dargestellt ist:

$$\mathbf{W}_r = \begin{bmatrix} \alpha_0 & \alpha_{n-1}^* \\ \alpha_1 & \alpha_{n-2}^* \\ ... & ... \\ \alpha_{k-1} & \alpha_k^* \\ \alpha_k & -\alpha_{k-1}^* \\ ... & ... \\ \alpha_{n-2} & -\alpha_1^* \\ \alpha_{n-1} & -\alpha_0^* \end{bmatrix}^H$$

   wobei n eine gerade Zahl ist, ein Wert von k gleich n/2 ist, $\alpha_j^*$ ein Konjugiertes von $\alpha_j$ ist und $0 \leq j \leq n-1$.

6. Basisstation (200) nach einem der Ansprüche 1 bis 5, wobei die zweite Bestimmungseinheit (202) speziell ausgelegt ist zum Bestimmen der zweiten Matrix, wobei die zweite Matrix durch $P_{rb0}^{OL}$ und $P_{rb1}^{OL}$ dargestellt ist, und $P_{rb0}^{OL}$ und $P_{rb1}^{OL}$ durch die folgenden Formeln dargestellt sind:

$$P_{rb0}^{OL} = \frac{1}{\sqrt{2}} \begin{bmatrix} 1 & 1 \\ 1 & -1 \end{bmatrix} \begin{bmatrix} p_0^0 & 0 \\ 0 & p_0^1 \end{bmatrix}, \; P_{rb1}^{OL} = \frac{1}{\sqrt{2}} \begin{bmatrix} 1 & -1 \\ 1 & 1 \end{bmatrix} \begin{bmatrix} p_0^0 & 0 \\ 0 & p_0^1 \end{bmatrix};$$

   oder

$$P_{rb0}^{OL} = \begin{bmatrix} 1 & 0 \\ 0 & 1 \end{bmatrix} \begin{bmatrix} p_0^0 & 0 \\ 0 & p_0^1 \end{bmatrix} \; P_{rb1}^{OL} = \begin{bmatrix} 0 & 1 \\ 1 & 0 \end{bmatrix} \begin{bmatrix} p_0^0 & 0 \\ 0 & p_0^1 \end{bmatrix};$$

   wobei $\begin{bmatrix} p_0^0 & p_0^1 \end{bmatrix}$ eine normalisierte anfängliche Vektormenge mit gleicher Amplitude ist, $|p_0^0|^2 + |p_0^1|^2 = 1$,

$\left|p_0^0\right| = \left|p_0^1\right|$, rb0 einen Frequenzdomänen-Ressourcenblock mit ungerader Indexnummer des Kanals der Basisstation darstellt, rbt einen Frequenzdomänen-Ressourcenblock mit gerader Indexnummer des Kanals der Basisstation darstellt, die ungerade Nummer und die gerade Nummer alternierend sind, $P_{rb0}^{OL}$ die zweite Matrix darstellt, die zum Senden eines Signals auf dem Frequenzdomänen-Ressourcenblock mit ungerader Indexnummer des Kanals der Basisstation verwendet wird, und $P_{rb1}^{OL}$ die zweite Matrix darstellt, die zum Senden eines Signals auf dem Frequenzdomänen-Ressourcenblock mit gerader Indexnummer des Kanals der Basisstation verwendet wird.

7. Basisstation (200) nach einem der Ansprüche 1 bis 5, wobei die zweite Bestimmungseinheit (202) speziell ausgelegt ist zum Bestimmen der zweiten Matrix, wobei die zweite Matrix durch $P_{rbt}^{OL}$ dargestellt ist und $P_{rbt}^{OL}$ durch die folgende Formel dargestellt ist:

$$P_{rbt}^{OL} = \frac{1}{\sqrt{2}} \begin{bmatrix} 1 & 0 \\ 0 & e^{it\theta} \end{bmatrix} \begin{bmatrix} 1 & 1 \\ 1 & e^{i\pi} \end{bmatrix} \begin{bmatrix} 1 & 0 \\ 0 & e^{it\theta} \end{bmatrix} \begin{bmatrix} p_0^0 & 0 \\ 0 & p_0^1 \end{bmatrix};$$

wobei i eine imaginäre Einheit ist, $\theta$ ein Phasenparameter für Verzögerungscodierung ist, t eine Indexnummer eines Frequenzdomänen-Ressourcenblocks des Kanals der Basisstation ist, $\begin{bmatrix} p_0^0 & p_0^1 \end{bmatrix}$ eine normalisierte anfängliche Vektormenge mit gleicher Amplitude ist, $\left|p_0^0\right|^2 + \left|p_0^1\right|^2 = 1$, $\left|p_0^0\right| = \left|p_0^1\right|$, rbt einen Frequenzdomänen-Ressourcenblock mit der Indexnummer t des Kanals der Basisstation darstellt und $P_{rbt}^{OL}$ die zweite Matrix darstellt, die zum Senden eines Signals auf dem Frequenzdomänen-Ressourcenblock mit der Indexnummer t des Kanals der Basisstation verwendet wird.

8. Basisstation (200) nach Anspruch 1, wobei die erste Bestimmungseinheit (201) spezifisch ausgelegt ist zum:

wenn ein Wert von m gleich 4 ist, Bestimmen der ersten Matrix $W_r$ entsprechend dem Eigenvektor $[\alpha_0 \ \alpha_1 \ ... \ \alpha_{n-1}]^T$, wobei $W_r$ durch die folgende Formel dargestellt ist:

$$W_r = \begin{bmatrix} \alpha_0 & \alpha_{n-1}^* & \alpha_k & \alpha_{k-1}^* \\ \alpha_1 & \alpha_{n-2}^* & \cdots & \cdots \\ \cdots & \cdots & \alpha_{n-2} & \alpha_1^* \\ \alpha_{k-1} & \alpha_k^* & \alpha_{n-1} & \alpha_0^* \\ \alpha_k & -\alpha_{k-1}^* & -\alpha_0 & \alpha_{n-1}^* \\ \cdots & \cdots & -\alpha_1 & \alpha_{n-2}^* \\ \alpha_{n-2} & -\alpha_1^* & \cdots & \cdots \\ \alpha_{n-1} & -\alpha_0^* & -\alpha_{k-1} & \alpha_k^* \end{bmatrix}^H$$

wobei n eine gerade Zahl ist, ein Wert von k gleich n/2 ist, $\alpha_j^*$ ein Konjugiertes von $\alpha_j$ ist und $0 \leq j \leq n-1$.

9. Basisstation (200) nach Anspruch 1 oder 8, wobei die zweite Bestimmungseinheit (202) speziell ausgelegt ist zum Bestimmen der zweiten Matrix, wobei die zweite Matrix durch $P_{rb0}^{OL}$, $P_{rb1}^{OL}$, $P_{rb2}^{OL}$ und $P_{rb3}^{OL}$ dargestellt ist und $P_{rb0}^{OL}$, $P_{rb1}^{OL}$, $P_{rb2}^{OL}$ und $P_{rb3}^{OL}$ durch die folgenden Formeln dargestellt sind:

$$P_{rb0}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb1}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb2}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb3}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

oder

$$P_{rb0}^{OL} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb1}^{OL} = \begin{bmatrix} 0 & 0 & 0 & 1 \\ 1 & 0 & 0 & 0 \\ 0 & 1 & 0 & 0 \\ 0 & 0 & 1 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb2}^{OL} = \begin{bmatrix} 0 & 0 & 1 & 0 \\ 0 & 0 & 0 & 1 \\ 1 & 0 & 0 & 0 \\ 0 & 1 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb3}^{OL} = \begin{bmatrix} 0 & 1 & 0 & 0 \\ 0 & 0 & 1 & 0 \\ 0 & 0 & 0 & 1 \\ 1 & 0 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

wobei $[p_0^0 \quad p_0^1 \quad p_0^2 \quad p_0^3]$ eine normalisierte anfängliche Vektormenge mit gleicher Amplitude ist,

$$|p_0^0| = |p_0^1| = |p_0^2| = |p_0^3|, \qquad |p_0^0|^2 + |p_0^1|^2 + |p_0^2|^2 + |p_0^3|^2 = 1, \qquad |p_0^0| = |p_0^1| = |p_0^2| = |p_0^3|,$$

rb0, rb1, rb2 bzw. rb3 vier Typen von Frequenzdomänen-Ressourcenblöcken mit Indexnummern modulo 4 des Kanals der Basisstation darstellen und $P_{rb0}^{OL}$, $P_{rb1}^{OL}$, $P_{rb2}^{OL}$ bzw. $P_{rb3}^{OL}$ zweite Matrizen darstellen, die zum Senden eines Signals auf den vier Typen von Frequenzdomänen-Ressourcenblöcken des Kanals der Basisstation verwendet werden.

10. Basisstation (200) nach Anspruch 1 oder 8, wobei die zweite Bestimmungseinheit (202) speziell ausgelegt ist zum Bestimmen der zweiten Matrix, wobei die zweite Matrix durch $P_{rbt}^{OL}$ dargestellt ist und $P_{rbt}^{OL}$ durch die folgende Formel dargestellt ist:

$$P_{rbt}^{OL} = \frac{1}{2}\begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix}\begin{bmatrix} 1 & 1 & 1 & 1 \\ 1 & e^{-i2\pi/4} & e^{-i4\pi/4} & e^{-i6\pi/4} \\ 1 & e^{-i4\pi/4} & e^{-i8\pi/4} & e^{-i12\pi/4} \\ 1 & e^{-i6\pi/4} & e^{-i12\pi/4} & e^{-i18\pi/4} \end{bmatrix}\begin{bmatrix} 1 & 0 & 0 & 0 \\ 0 & e^{it\theta} & 0 & 0 \\ 0 & 0 & e^{i2t\theta} & 0 \\ 0 & 0 & 0 & e^{i3t\theta} \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

wobei i eine imaginäre Einheit ist, θ ein Phasenparameter für Verzögerungscodierung ist, t eine Indexnummer eines Frequenzdomänen-Ressourcenblocks des Kanals der Basisstation ist, $[p_0^0 \quad p_0^1 \quad p_0^2 \quad p_0^3]$ eine normalisierte anfängliche Vektormenge mit gleicher Amplitude ist, $|p_0^0|^2 + |p_0^1|^2 + |p_0^2|^2 + |p_0^3|^2 = 1$, $|p_0^0| = |p_0^1| = |p_0^2| = |p_0^3|$, rbt einen Frequenzdomänen-Ressourcenblock mit der Indexnummer t des Kanals der Basisstation darstellt und $P_{rbt}^{OL}$ die zweite Matrix darstellt, die zum Senden eines Signals auf dem Frequenzdomänen-Ressourcenblock mit der Indexnummer t des Kanals der Basisstation verwendet wird.

11. Auf gerichtetem Strahl basierendes Mehrfachstrom-Übertragungsverfahren mit offener Schleife, das Folgendes umfasst:

Bestimmen (101) einer ersten Matrix entsprechend einem Eigenvektor, wobei der Eigenvektor ein Haupteigenvektor ist, der durch Durchführen einer Eigenvektorzerlegung auf einer Uplink-Kanalantwort eines Kanals einer Basisstation erhalten wird, der Eigenvektor ein n-dimensionaler Vektor ist, n eine Anzahl von Sendekanälen des Kanals der Basisstation ist, die erste Matrix eine n*m-Strahlgewichtungsmatrix ist, jedes Nicht-Null-Element der ersten Matrix ein Teilvektor des Eigenvektors, ein Wert, der erhalten wird, nachdem ein Teilvektor des Eigenvektors mit -1 multipliziert wird, ein Konjugiertes eines Teilvektors des Eigenvektors oder ein Wert, der erhalten wird, nachdem ein Konjugiertes eines Teilvektors des Eigenvektors mit -1 multipliziert wird, ist, n-dimensionale Vektoren, die durch beliebige zwei Zeilen von Elementen der ersten Matrix gebildet werden, nicht korreliert sind, m eine positive ganze Zahl ist, 1<m≤n und der Kanal der Basisstation ein SIMO-Kanal (Single-Input, Multiple-Output) mit einem Eingang und mehreren Ausgängen der Basisstation oder ein SIMO-Kanal, zerlegt aus einem MIMO-Kanal (Multiple-Input, Multiple-Output) mit mehreren Eingängen und mehreren Ausgängen der Basisstation ist;
Bestimmen (102) einer zweiten Matrix, wobei die zweite Matrix eine m*m-Matrix ist und verwendet wird, um randomisierte Codierung auf einem Sendesignal des Kanals der Basisstation bezüglich der ersten Matrix durchzuführen; und
Durchführen (103) von Beamforming auf einem Sendekanal der Basisstation entsprechend dem Produkt aus der ersten Matrix und der zweiten Matrix.

12. Verfahren nach Anspruch 11, wobei, wenn ein Wert von m gleich 2 ist, das Bestimmen (101) einer ersten Matrix entsprechend einem Eigenvektor Folgendes umfasst:

Aufteilen des Eigenvektors $[\alpha_0\ \alpha_1\ ...\ \alpha_{n-1}]^T$ in eine erste Menge von Strahl gewichten $\alpha_{x(0)}$, $\alpha_{x(1)},...,$ $\alpha_{x(k-1)}$ und eine zweite Menge von Strahlgewichten $\alpha_{x(k)}$, $\alpha_{x(k+1)},...,$ $\alpha_{x(n-1)}$ entsprechend einer Polarisierungsrichtung, wobei n eine gerade Zahl ist, ein Wert von k gleich n/2 ist und x(0) bis x(n-1) eine Anordnungsweise von 0 bis n-1 ist; und Bestimmen der ersten Matrix $W_r$ entsprechend der ersten Menge von Strahlgewichten und der zweiten Menge von Strahlgewichten, wobei $W_r$ durch die folgende Formel dargestellt wird:

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k)} \\ 0 & \cdots \\ 0 & \alpha_{x(n-2)} \\ 0 & \alpha_{x(n-1)} \end{bmatrix}^H.$$

13. Verfahren nach Anspruch 11, wobei, wenn ein Wert von m gleich 2 ist, das Bestimmen (101) einer ersten Matrix entsprechend einem Eigenvektor Folgendes umfasst:

Aufteilen des Eigenvektors $[\alpha_0\ \alpha_1...\ \alpha_{n-1}]^T$ in eine erste Menge von Strahlgewichten $\alpha_{x(0)}$, $\alpha_{x(1)},...,$ $\alpha_{x(k-1)}$ und eine zweite Menge von Strahlgewichten $\alpha_{x(k)}$, $\alpha_{x(k+1)},...,$ $\alpha_{x(n-1)}$ entsprechend einer Polarisierungsrichtung, wobei n eine gerade Zahl ist, ein Wert von k gleich n/2 ist und x(0) bis x(n-1) eine Anordnungsweise von 0 bis n-1 ist; und Bestimmen der ersten Matrix $W_r$ entsprechend der ersten Menge von Strahlgewichten, wobei die erste Menge von Strahlgewichten eine Menge von Strahlgewichten mit einer größeren statistischen Güte aus der ersten Menge von Strahlgewichten und der zweiten Menge von Strahlgewichten ist, und

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(0)} \\ 0 & \alpha_{x(1)} \\ 0 & \cdots \\ 0 & \alpha_{x(k-1)} \end{bmatrix}^H,$$

or

$$W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k-1)} \\ 0 & \cdots \\ 0 & \alpha_{x(1)} \\ 0 & \alpha_{x(0)} \end{bmatrix}^H.$$

14. Verfahren nach Anspruch 11, wobei, wenn ein Wert von m gleich 2 ist, das Bestimmen (101) einer ersten Matrix entsprechend einem Eigenvektor Folgendes umfasst:

Bestimmen der ersten Matrix $W_r$ entsprechend dem Eigenvektor $[\alpha_0\ \alpha_1\ ...\ \alpha_{n-1}]^T$, wobei $W_r$ durch die folgende

Formel dargestellt ist:

$$W_r = \begin{bmatrix} \alpha_0 & \alpha_{n-1}^* \\ \alpha_1 & \alpha_{n-2}^* \\ \ldots & \ldots \\ \alpha_{n-2} & \alpha_1^* \\ \alpha_{n-1} & \alpha_0^* \end{bmatrix}^H$$

wobei $\alpha_j^*$ ein Konjugiertes von $\alpha_j$ ist und $0 \leq j \leq n-1$.

15. Verfahren nach Anspruch 11, wobei, wenn ein Wert von m gleich 2 ist, das Bestimmen (101) einer ersten Matrix entsprechend einem Eigenvektor Folgendes umfasst:

Bestimmen der ersten Matrix $W_r$ entsprechend dem Eigenvektor $[\alpha_0 \, \alpha_1 \, \ldots \, \alpha_{n-1}]^T$, wobei $W_r$ durch die folgende Formel dargestellt ist:

$$W_r = \begin{bmatrix} \alpha_0 & \alpha_{n-1}^* \\ \alpha_1 & \alpha_{n-2}^* \\ \ldots & \ldots \\ \alpha_{k-1} & \alpha_k^* \\ \alpha_k & -\alpha_{k-1}^* \\ \ldots & \ldots \\ \alpha_{n-2} & -\alpha_1^* \\ \alpha_{n-1} & -\alpha_0^* \end{bmatrix}^H$$

wobei n eine gerade Zahl ist, ein Wert von k gleich n/2 ist, $\alpha_j^*$ ein Konjugiertes von $\alpha_j$ ist und $0 \leq j \leq n-1$.

**Revendications**

1. Station de base (200), comprenant :

une première unité de détermination (201), configurée pour déterminer une première matrice selon un vecteur propre, dans laquelle le vecteur propre est un vecteur propre principal obtenu en réalisant une décomposition de vecteur propre sur une réponse de canal de liaison montante d'un canal de la station de base, le vecteur propre est un vecteur n dimensionnel, n est une quantité de canaux d'émission du canal de la station de base, la première matrice est une matrice n*m de poids de faisceau, chaque élément non nul de la première matrice est un sous-vecteur du vecteur propre, une valeur obtenue après qu'un sous-vecteur du vecteur propre est multiplié par -1, un conjugué d'un sous-vecteur du vecteur propre, ou une valeur obtenue après qu'un conjugué d'un sous-vecteur du vecteur propre est multiplié par -1, des vecteurs n dimensionnels formés par deux lignes quelconques d'éléments de la première matrice sont non corrélés, m est un nombre entier positif, $1 < m \leq n$, et le canal de la station de base est un canal à entrée unique, sorties multiples, SIMO, de la station de base ou un canal SIMO décomposé à partir d'un canal à entrées multiples, sorties multiples, MIMO, de la station de base ;
une seconde unité de détermination (202), configurée pour déterminer une seconde matrice, dans laquelle la seconde matrice est une matrice m*m et est utilisée pour réaliser un encodage randomisé sur un signal d'émission du canal de la station de base en référence à la première matrice ; et
une unité de correction de canal (203), configurée pour réaliser une formation de faisceaux sur un canal d'émission du canal de la station de base selon le produit de la première matrice et de la seconde matrice.

**2.** Station de base (200) selon la revendication 1, dans laquelle la première unité de détermination (201) est configurée spécifiquement pour :

lorsqu'une valeur de m est 2, diviser le vecteur propre $[\alpha_0 \; \alpha_1 \; ... \; \alpha_{n-1}]^T$ en un premier ensemble de poids de faisceau $\alpha_{x(0)}, \alpha_{x(1)}, ..., \alpha_{x(k-1)}$ et un second ensemble de poids de faisceau $\alpha_{x(k)}, \alpha_{x(k+1)}, ..., \alpha_{x(n-1)}$ selon une direction de polarisation, dans laquelle n est un nombre pair, une valeur de k est n/2, et x(0) à x(n-1) est une manière d'agencement de 0 à n-1 ; et

déterminer la première matrice $W_r$ selon le premier ensemble de poids de faisceau et le second ensemble de poids de faisceau, dans laquelle $W_r$ est représenté par la formule suivante :

$$
W_r = \begin{bmatrix}
\alpha_{x(0)} & 0 \\
\alpha_{x(1)} & 0 \\
... & 0 \\
\alpha_{x(k-1)} & 0 \\
0 & \alpha_{x(k)} \\
0 & ... \\
0 & \alpha_{x(n-2)} \\
0 & \alpha_{x(n-1)}
\end{bmatrix}^H ,
$$

**3.** Station de base (200) selon la revendication 1, dans laquelle la première unité de détermination (201) est configurée spécifiquement pour :

lorsqu'une valeur de m est 2, diviser le vecteur propre $[\alpha_0 \; \alpha_1 \; ... \; \alpha_{n-1}]^T$ en un premier ensemble de poids de faisceau $\alpha_{x(0)}, \alpha_{x(1)}, ..., \alpha_{x(k-1)}$ et un second ensemble de poids de faisceau $\alpha_{x(k)}, \alpha_{x(k+1)}, ..., \alpha_{x(n-1)}$ selon une direction de polarisation, dans laquelle n est un nombre pair, une valeur de k est n/2, et x(0) à x(n-1) est une manière d'agencement de 0 à n-1 ; et

déterminer la première matrice $W_r$ selon le premier ensemble de poids de faisceau, dans laquelle le premier ensemble de poids de faisceau est un ensemble de poids de faisceau avec une puissance statistique supérieure du premier ensemble de poids de faisceau et du second ensemble de poids de faisceau, et $W_r$ est représenté par la formule suivante :

$$
W_r = \begin{bmatrix}
\alpha_{x(0)} & 0 \\
\alpha_{x(1)} & 0 \\
... & 0 \\
\alpha_{x(k-1)} & 0 \\
0 & \alpha_{x(0)} \\
0 & \alpha_{x(1)} \\
0 & ... \\
0 & \alpha_{x(k-1)}
\end{bmatrix}^H ,
$$

ou

$$W_r = \begin{bmatrix} \alpha_{x(0)} & 0 \\ \alpha_{x(1)} & 0 \\ \cdots & 0 \\ \alpha_{x(1-1)} & 0 \\ 0 & \alpha_{x(1-1)}^* \\ 0 & \cdots \\ 0 & \alpha_{x(1)}^* \\ 0 & \alpha_{x(0)}^* \end{bmatrix}^H.$$

4. Station de base (200) selon la revendication 1, dans laquelle la première unité de détermination (201) est configurée spécifiquement pour :

   lorsqu'une valeur de m est 2, déterminer la première matrice $W_r$ selon le vecteur propre $[\alpha_0 \ \alpha_1 \ ... \ \alpha_{n-1}]^T$ dans laquelle $W_r$ est représenté par la formule suivante :

$$W_r = \begin{bmatrix} \alpha_0 & \alpha_{n-1}^* \\ \alpha_1 & \alpha_{n-2}^* \\ \cdots & \cdots \\ \alpha_{n-2} & \alpha_1^* \\ \alpha_{n-1} & \alpha_0^* \end{bmatrix}^H$$

   dans laquelle $\alpha_j^*$ est un conjugué de $\alpha_j$, et $0 \le j \le n-1$.

5. Station de base (200) selon la revendication 1, dans laquelle la première unité de détermination (201) est configurée spécifiquement pour :

   lorsqu'une valeur de m est 2, déterminer la première matrice $W_r$ selon le vecteur propre $[\alpha_0 \ \alpha_1 \ ... \ \alpha_{n-1}]^T$, dans laquelle $W_r$ est représenté par la formule suivante :

$$W_r = \begin{bmatrix} \alpha_0 & \alpha_{n-1}^* \\ \alpha_1 & \alpha_{n-2}^* \\ \cdots & \cdots \\ \alpha_{k-1} & \alpha_k^* \\ \alpha_k & -\alpha_{k-1}^* \\ \cdots & \cdots \\ \alpha_{n-2} & -\alpha_1^* \\ \alpha_{n-1} & -\alpha_0^* \end{bmatrix}^H$$

   dans laquelle n est un nombre pair, une valeur de k est n/2, et $\alpha_j^*$ est un conjugué de $\alpha_j$, et $0 \le j \le n-1$.

6. Station de base (200) selon l'une quelconque des revendications 1 à 5, dans laquelle la seconde unité de détermination (202) est configurée spécifiquement pour déterminer la seconde matrice, dans laquelle la seconde matrice est représentée par $\mathbf{P}_{rb0}^{OL}$ et $\mathbf{P}_{rb1}^{OL}$, et $\mathbf{P}_{rb0}^{OL}$ et $\mathbf{P}_{rb1}^{OL}$ sont représentés par les formules suivantes :

$$P_{rb0}^{OL} = \frac{1}{\sqrt{2}}\begin{bmatrix} 1 & 1 \\ 1 & -1 \end{bmatrix}\begin{bmatrix} p_0^0 & 0 \\ 0 & p_0^1 \end{bmatrix}, \quad P_{rb1}^{OL} = \frac{1}{\sqrt{2}}\begin{bmatrix} 1 & -1 \\ 1 & 1 \end{bmatrix}\begin{bmatrix} p_0^0 & 0 \\ 0 & p_0^1 \end{bmatrix};$$

ou

$$P_{rb0}^{OL} = \begin{bmatrix} 1 & 0 \\ 0 & 1 \end{bmatrix}\begin{bmatrix} p_0^0 & 0 \\ 0 & p_0^1 \end{bmatrix}, \quad P_{rb1}^{OL} = \begin{bmatrix} 0 & 1 \\ 1 & 0 \end{bmatrix}\begin{bmatrix} p_0^0 & 0 \\ 0 & p_0^1 \end{bmatrix};$$

dans laquelle $\begin{bmatrix} p_0^0 & p_0^1 \end{bmatrix}$ est un ensemble de vecteurs initiaux normalisés d'amplitude égale, $|p_0^0|^2 + |p_0^1|^2 = 1,$ $|p_0^0| = |p_0^1|$, rb0 représente un bloc de ressources de domaine de fréquence avec un numéro d'indice impair du canal de la station de base, rb1 représente un bloc de ressources de domaine de fréquence avec un numéro d'indice pair du canal de la station de base, le numéro impair et le numéro pair sont alternés, $P_{rb0}^{OL}$ représente la seconde matrice utilisée pour émettre un signal sur le bloc de ressources de domaine de fréquence avec un numéro d'indice impair du canal de la station de base, et $P_{rb1}^{OL}$ représente la seconde matrice utilisée pour émettre un signal sur le bloc de ressources de domaine de fréquence avec un numéro d'indice pair du canal de la station de base.

7. Station de base (200) selon l'une quelconque des revendications 1 à 5, dans laquelle la seconde unité de détermination (202) est configurée spécifiquement pour déterminer la seconde matrice, dans laquelle la seconde matrice est représentée par $P_{rbt}^{OL}$, et $P_{rbt}^{OL}$ est représenté par la formule suivante :

$$P_{rbt}^{OL} = \frac{1}{\sqrt{2}}\begin{bmatrix} 1 & 0 \\ 0 & e^{it\theta} \end{bmatrix}\begin{bmatrix} 1 & 1 \\ 1 & e^{i\pi} \end{bmatrix}\begin{bmatrix} 1 & 0 \\ 0 & e^{it\theta} \end{bmatrix}\begin{bmatrix} p_0^0 & 0 \\ 0 & p_0^1 \end{bmatrix};$$

dans laquelle i est une unité imaginaire, $\theta$ est un paramètre de phase pour un encodage à retard, t est un numéro d'indice d'un bloc de ressources de domaine de fréquence du canal de la station de base, $\begin{bmatrix} p_0^0 & p_0^1 \end{bmatrix}$ est un ensemble de vecteurs initiaux normalisés d'amplitude égale, $|p_0^0|^2 + |p_0^1|^2 = 1, |p_0^0| = |p_0^1|$, rbt représente un bloc de ressources de domaine de fréquence avec le numéro d'indice t du canal de la station de base, et $P_{rbt}^{OL}$ représente la seconde matrice utilisée pour émettre un signal sur le bloc de ressources de domaine de fréquence avec le numéro d'indice t du canal de la station de base.

8. Station de base (200) selon la revendication 1, dans laquelle la première unité de détermination (201) est configurée spécifiquement pour :

lorsqu'une valeur de m est 4, déterminer la première matrice $W_r$ selon le vecteur propre $[\alpha_0 \ \alpha_1 \ ... \ \alpha_{n-1}]^T$, dans laquelle $W_r$ est représenté par la formule suivante :

$$W_r = \begin{bmatrix} \alpha_0 & \alpha_{n-1}^* & \alpha_k & \alpha_{k-1}^* \\ \alpha_1 & \alpha_{n-2}^* & \cdots & \cdots \\ \cdots & \cdots & \alpha_{n-2} & \alpha_1^* \\ \alpha_{k-1} & \alpha_k^* & \alpha_{n-1} & \alpha_0^* \\ \alpha_k & -\alpha_{k-1}^* & -\alpha_0 & \alpha_{n-1}^* \\ \cdots & \cdots & -\alpha_1 & \alpha_{n-2}^* \\ \alpha_{n-2} & -\alpha_1^* & \cdots & \cdots \\ \alpha_{n-1} & -\alpha_0^* & -\alpha_{k-1} & \alpha_k^* \end{bmatrix}^H$$

dans laquelle n est un nombre pair, une valeur de k est n/2, $\alpha_j^*$ est un conjugué de $\alpha_j$ et $0 \leq j \leq$ n-1.

**9.** Station de base (200) selon la revendication 1 ou 8, dans laquelle la seconde unité de détermination (202) est configurée spécifiquement pour déterminer la seconde matrice, dans laquelle la seconde matrice est représentée par $P_{rb0}^{OL}$, $P_{rb1}^{OL}$, $P_{rb2}^{OL}$ et $P_{rb3}^{OL}$, et $P_{rb0}^{OL}$, $P_{rb1}^{OL}$, $P_{rb2}^{OL}$, et $P_{rb3}^{OL}$ sont représentés par les formules suivantes :

$$P_{rb0}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad P_{rb1}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb2}^{OL} = \frac{1}{2}\begin{bmatrix} 1 & 1 & 1 & 1 \\ 1 & -1 & 1 & -1 \\ 1 & j & -1 & -j \\ 1 & -j & -1 & j \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad P_{rb3}^{OL} = \frac{1}{2}\begin{bmatrix} 1 & j & -1 & -j \\ 1 & -j & -1 & j \\ 1 & 1 & 1 & 1 \\ 1 & -1 & 1 & -1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

ou

$$P_{rb0}^{OL} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad P_{rb1}^{OL} = \begin{bmatrix} 0 & 0 & 0 & 1 \\ 1 & 0 & 0 & 0 \\ 0 & 1 & 0 & 0 \\ 0 & 0 & 1 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix},$$

$$P_{rb2}^{OL} = \begin{bmatrix} 0 & 0 & 1 & 0 \\ 0 & 0 & 0 & 1 \\ 1 & 0 & 0 & 0 \\ 0 & 1 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix}, \quad P_{rb3}^{OL} = \begin{bmatrix} 0 & 1 & 0 & 0 \\ 0 & 0 & 1 & 0 \\ 0 & 0 & 0 & 1 \\ 1 & 0 & 0 & 0 \end{bmatrix}\begin{bmatrix} p_0^0 & 0 & 0 & 0 \\ 0 & p_0^1 & 0 & 0 \\ 0 & 0 & p_0^2 & 0 \\ 0 & 0 & 0 & p_0^3 \end{bmatrix};$$

dans laquelle $\begin{bmatrix} p_0^0 & p_0^1 & p_0^2 & p_0^3 \end{bmatrix}$ est un ensemble de vecteurs initiaux normalisés d'amplitude égale,

$$\left|\mathbf{p}_0^0\right| = \left|\mathbf{p}_0^1\right| = \left|\mathbf{p}_0^2\right| = \left|\mathbf{p}_0^3\right|, \quad \left|\mathbf{p}_0^0\right|^2 + \left|\mathbf{p}_0^1\right|^2 + \left|\mathbf{p}_0^2\right|^2 + \left|\mathbf{p}_0^3\right|^2 = 1, \left|\mathbf{p}_0^0\right| = \left|\mathbf{p}_0^1\right| = \left|\mathbf{p}_0^2\right| = \left|\mathbf{p}_0^3\right|, \text{ rb0, rb1, rb2 et rb3}$$

représentent respectivement quatre types de blocs de ressources de domaine de fréquence avec des numéros d'indice modulo 4 du canal de la station de base, et $\mathbf{P}_{rb0}^{OL}$, $\mathbf{P}_{rb1}^{OL}$, $\mathbf{P}_{rb2}^{OL}$ et $\mathbf{P}_{rb3}^{OL}$ représentent respectivement des secondes matrices utilisées pour émettre un signal sur les quatre types de blocs de ressources de domaine de fréquence du canal de la station de base.

**10.** Station de base (200) selon la revendication 1 ou 8, dans laquelle la seconde unité de détermination (202) est configurée spécifiquement pour déterminer la seconde matrice, dans laquelle la seconde matrice est représentée par $\mathbf{P}_{rbt}^{OL}$, et $\mathbf{P}_{rbt}^{OL}$ est représenté par la formule suivante :

$$\mathbf{P}_{rbt}^{OL} = \frac{1}{2}
\begin{bmatrix}
1 & 0 & 0 & 0 \\
0 & e^{it\theta} & 0 & 0 \\
0 & 0 & e^{i2t\theta} & 0 \\
0 & 0 & 0 & e^{i3t\theta}
\end{bmatrix}
\begin{bmatrix}
1 & 1 & 1 & 1 \\
1 & e^{-i2\pi/4} & e^{-i4\pi/4} & e^{-i6\pi/4} \\
1 & e^{-i4\pi/4} & e^{-i8\pi/4} & e^{-i12\pi/4} \\
1 & e^{-i6\pi/4} & e^{-i12\pi/4} & e^{-i18\pi/4}
\end{bmatrix}
\begin{bmatrix}
1 & 0 & 0 & 0 \\
0 & e^{it\theta} & 0 & 0 \\
0 & 0 & e^{i2t\theta} & 0 \\
0 & 0 & 0 & e^{i3t\theta}
\end{bmatrix}
\begin{bmatrix}
p_0^0 & 0 & 0 & 0 \\
0 & p_0^1 & 0 & 0 \\
0 & 0 & p_0^2 & 0 \\
0 & 0 & 0 & p_0^3
\end{bmatrix};$$

dans laquelle i est une unité imaginaire, $\theta$ est un paramètre de phase pour un encodage à retard, t est un numéro d'indice d'un bloc de ressources de domaine de fréquence du canal de la station de base, $\begin{bmatrix} p_0^0 & p_0^1 & p_0^2 & p_0^3 \end{bmatrix}$ est un ensemble de vecteurs initiaux normalisés d'amplitude égale, $\left|\mathbf{p}_0^0\right|^2 + \left|\mathbf{p}_0^1\right|^2 + \left|\mathbf{p}_0^2\right|^2 + \left|\mathbf{p}_0^3\right|^2 = 1, \left|\mathbf{p}_0^0\right| = \left|\mathbf{p}_0^1\right| = \left|\mathbf{p}_0^2\right| = \left|\mathbf{p}_0^3\right|,$ rbt représente un bloc de ressources de domaine de fréquence avec le numéro d'indice t du canal de la station de base, et $\mathbf{P}_{rbt}^{OL}$ représente la seconde matrice utilisée pour émettre un signal sur le bloc de ressources de domaine de fréquence avec le numéro d'indice t du canal de la station de base.

**11.** Procédé d'émission à flux multiples en boucle ouverte par faisceaux dirigés, comprenant :

la détermination (101) d'une première matrice selon un vecteur propre, dans lequel le vecteur propre est un vecteur propre principal obtenu en réalisant une décomposition de vecteur propre sur une réponse de canal de liaison montante d'un canal d'une station de base, le vecteur propre est un vecteur n dimensionnel, n est une quantité de canaux d'émission du canal de la station de base, la première matrice est une matrice n*m de poids de faisceau, chaque élément non nul de la première matrice est un sous-vecteur du vecteur propre, une valeur obtenue après qu'un sous-vecteur du vecteur propre est multiplié par -1, un conjugué d'un sous-vecteur du vecteur propre, ou une valeur obtenue après qu'un conjugué d'un sous-vecteur du vecteur propre est multiplié par - 1, des vecteurs n dimensionnels formés par deux lignes quelconques d'éléments de la première matrice sont non corrélés, m est un nombre entier positif, $1 < m \le n$, et le canal de la station de base est un canal à entrée unique, sorties multiples, SIMO, de la station de base ou un canal SIMO décomposé à partir d'un canal à entrées multiples, sorties multiples, MIMO, de la station de base ;
la détermination (102) d'une seconde matrice, dans lequel la seconde matrice est une matrice m*m et est utilisée pour réaliser un encodage randomisé sur un signal d'émission du canal de la station de base en référence à la première matrice ; et
la réalisation (103) d'une formation de faisceaux sur un canal d'émission du canal de la station de base selon le produit de la première matrice et de la seconde matrice.

**12.** Procédé selon la revendication 11, dans lequel, lorsqu'une valeur de m est 2, la détermination (101) d'une première matrice selon un vecteur propre comprend :

la division du vecteur propre $[\alpha_0 \, \alpha_1 \, ... \, \alpha_{n-1}]^T$ en un premier ensemble de poids de faisceau $\alpha_{x(0)}, \alpha_{x(1)}, ..., \alpha_{x(k-1)}$ et un second ensemble de poids de faisceau $\alpha_{x(k)}, \alpha_{x(k+1)}, ..., \alpha_{x(n-1)}$ selon une direction de polarisation, dans lequel n est un nombre pair, une valeur de k est n/2, et x(0) à x(n-l) est une manière d'agencement de 0 à n-1 ; et la détermination de la première matrice $W_r$ selon le premier ensemble de poids de faisceau et le second ensemble de poids de faisceau, dans lequel $W_r$ est représenté par la formule suivante :

$$
W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k)} \\ 0 & \cdots \\ 0 & \alpha_{x(n-2)} \\ 0 & \alpha_{x(n-1)} \end{bmatrix}^H .
$$

13. Procédé selon la revendication 11, dans lequel, lorsqu'une valeur de m est 2, la détermination (101) d'une première matrice selon un vecteur propre comprend :

la division du vecteur propre $[\alpha_0\ \alpha_1\ ...\ \alpha_{n-1}]^T$ en un premier ensemble de poids de faisceau $\alpha_{x(0)}$, $\alpha_{x(1)}$, ..., $\alpha_{x(k-1)}$ et un second ensemble de poids de faisceau $\alpha_{x(k)}$, $\alpha_{x(k+1)}$, ..., $\alpha_{x(n-1)}$ selon une direction de polarisation, dans lequel n est un nombre pair, une valeur de k est n/2, et x(0) à x(n-1) est une manière d'agencement de 0 à n-1 ; et la détermination de la première matrice $W_r$ selon le premier ensemble de poids de faisceau, dans lequel le premier ensemble de poids de faisceau est un ensemble de poids de faisceau avec une puissance statistique supérieure du premier ensemble de poids de faisceau et du second ensemble de poids de faisceau, et

$$
W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(0)} \\ 0 & \alpha_{x(1)} \\ 0 & \cdots \\ 0 & \alpha_{x(k-1)} \end{bmatrix}^H ,
$$

ou

$$
W_r = \begin{bmatrix} \alpha_{x(0)} & 0 \\ \alpha_{x(1)} & 0 \\ \cdots & 0 \\ \alpha_{x(k-1)} & 0 \\ 0 & \alpha_{x(k-1)}^* \\ 0 & \cdots \\ 0 & \alpha_{x(1)}^* \\ 0 & \alpha_{x(0)}^* \end{bmatrix}^H .
$$

14. Procédé selon la revendication 11, dans lequel, lorsqu'une valeur de m est 2, la détermination (101) d'une première matrice selon un vecteur propre comprend :

la détermination de la première matrice $W_r$ selon le vecteur propre $[\alpha_0\ \alpha_1\ ...\ \alpha_{n-1}]^T$, dans lequel $W_r$ est représenté

par la formule suivante :

$$W_r = \begin{bmatrix} \alpha_0 & \alpha_{n-1}^* \\ \alpha_1 & \alpha_{n-2}^* \\ \cdots & \cdots \\ \alpha_{n-2} & \alpha_1^* \\ \alpha_{n-1} & \alpha_0^* \end{bmatrix}^H$$

dans lequel $\alpha j^*$ est un conjugué de $\alpha j$, et $0 \leq j \leq n-1$.

15. Procédé selon la revendication 11, dans lequel, lorsqu'une valeur de m est 2, la détermination (101) d'une première matrice selon un vecteur propre comprend :

la détermination de la première matrice $W_r$ selon le vecteur propre $[\alpha_0\,\alpha_1\,...\,\alpha_{n-1}]^T$, dans lequel $W_r$ est représenté par la formule suivante :

$$W_r = \begin{bmatrix} \alpha_0 & \alpha_{n-1}^* \\ \alpha_1 & \alpha_{n-2}^* \\ \cdots & \cdots \\ \alpha_{k-1} & \alpha_k^* \\ \alpha_k & -\alpha_{k-1}^* \\ \cdots & \cdots \\ \alpha_{n-2} & -\alpha_1^* \\ \alpha_{n-1} & -\alpha_0^* \end{bmatrix}^H$$

dans lequel n est un nombre pair, une valeur de k est n/2, $\alpha_j^*$ est un conjugué de $\alpha_j$, et $0 \leq j \leq n-1$.

Determine a first matrix according to an eigenvector  101

Determine a second matrix, where the second matrix is an m*m matrix and is used to perform randomized encoding on a transmit signal of a channel of a base station with reference to the first matrix  102

Perform beamforming on the transmit channel of the channel of the base station according to the first matrix and the second matrix  103

FIG. 1

200

First determining unit 201

Second determining unit 202

Channel correction unit 203

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010075172 A2

**Non-patent literature cited in the description**

- MIMO technique for 1.28Mcps TDD system had been discussed intensively in RAN WG1. *3GPP document R1-082560*